(19) Europäisches Patentamt
European Patent Office
Office européen des brevets

(11) EP 2 270 582 A1

(12) **EUROPEAN PATENT APPLICATION**
published in accordance with Art. 153(4) EPC

(43) Date of publication:
**05.01.2011 Bulletin 2011/01**

(21) Application number: **09733297.7**

(22) Date of filing: **10.04.2009**

(51) Int Cl.:
***G02F 1/1337*** *(2006.01)*

(86) International application number:
**PCT/JP2009/001665**

(87) International publication number:
**WO 2009/128229 (22.10.2009 Gazette 2009/43)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **14.04.2008 JP 2008105006**

(71) Applicant: **Sharp Kabushiki Kaisha**
**Osaka-shi, Osaka 545-8522 (JP)**

(72) Inventors:
- **HAKOI, Hiroyuki**
  **Osaka-shi**
  **Osaka 545-8522 (JP)**
- **INOUE, Iichiroh**
  **Osaka-shi**
  **Osaka 545-8522 (JP)**
- **MIYACHI, Koichi**
  **Osaka-shi**
  **Osaka 545-8522 (JP)**

(74) Representative: **Müller - Hoffmann & Partner**
**Patentanwälte**
**Innere Wiener Strasse 17**
**81667 München (DE)**

# (54) LIQUID CRYSTAL DISPLAY DEVICE

(57) A pixel of a liquid crystal display device of the present invention includes first and second linear alignment control structures **10a, 20a.** The first and second linear alignment control structures each include a first component extending along a first axis **L1** and a second component extending along a second axis **L2** that is different from the first axis. Each of the first and second axes generally bisects angles between the polarization axes of the pair of polarizing plates. At least one group of the first and second linear alignment control structures are ribs **20a.** A first component **20a1** of the rib includes three or more first linear portions arranged along the first axis. The first linear portions are arranged such that adjacent two form an angle of θ1 where 50°≤θ1<180° and that the direction which bisects θ1 is generally perpendicular to the first axis. A second component **20a2** of the rib includes three or more second linear portions arranged along the second axis. The second linear portions are arranged such that adjacent two form an angle of θ2 where 50°≤θ2<180° and that the direction which bisects θ2 is generally perpendicular to the second axis.

*FIG.1*

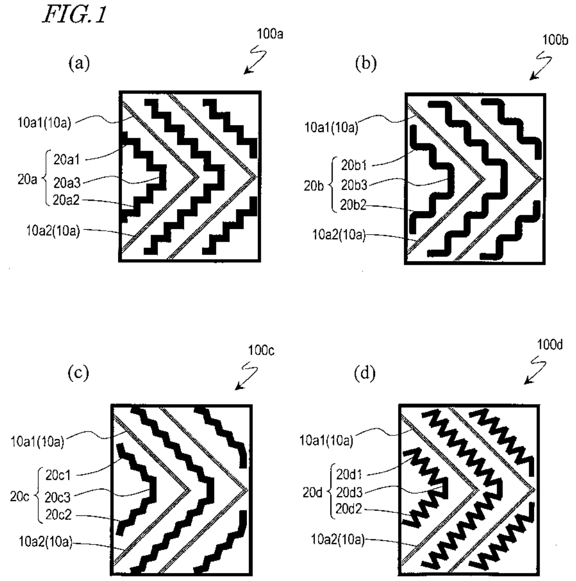


EP 2 270 582 A1

## Description

### TECHNICAL FIELD

The present invention relates to a liquid crystal display device and specifically to a vertical alignment mode liquid crystal display device.

### BACKGROUND ART

In recent years, vertical alignment (VA) mode liquid crystal display devices which have wider viewing angles and higher contrast ratios than conventional TN mode liquid crystal display devices have been used in a wide variety of display devices, typically in large-size display devices, such as television displays and information displays.

The VA mode liquid crystal display devices have a liquid crystal layer formed of a nematic liquid crystal material of negative dielectric anisotropy. In the case where no voltage is applied across this liquid crystal layer (including a case where a voltage lower than a threshold voltage is applied), liquid crystal molecules are oriented substantially vertical (not less than 85° and not more than 90°) to the substrate surface (a surface of a vertical alignment film). In the case where a voltage is applied across the liquid crystal layer, the liquid crystal molecules incline toward orientations parallel to the substrate surface.

MVA (Multi-Domain Vertical Alignment) mode is known in which the viewing angle characteristics are further improved as compared with the VA mode liquid crystal display devices (see Patent Document 1). In the MVA mode devices, linear alignment control structures (slits or ribs) extending in two directions perpendicular to each other are provided to form four liquid crystal domains between the alignment control structures such that the azimuths of the directors which are representative of the respective domains form angles of 45° relative to the polarization axes (transmission axes) of polarizing plates placed in crossed Nicols. Assuming that the azimuthal angle of 0° is identical with the 3 o'clock direction of the clock dial and that the counterclockwise direction is the positive direction, the azimuthal angles of the directors of the four domains are 45°, 135°, 225°, and 315°. Such a configuration in which four domains are formed in one pixel is referred to as "4-domain alignment structure" or simply "4D structure". Note that some of the MVA mode liquid crystal display devices in which both alignment control structures provided on the liquid crystal layer sides of the pair of substrates opposing each other via the liquid crystal layer are slits formed in the electrodes are sometimes referred to as PVA (Patterned Vertical Alignment) mode.

The VA mode liquid crystal display devices perform a black display in the absence of an applied voltage, i.e., while liquid crystal molecules are oriented vertical to the substrate surface (normally black mode). Therefore, an excellent black display (low luminance) can be achieved, and as a result, a high contrast ratio can be realized.

### CITATION LIST

### PATENT LITERATURE

Patent Document 1: Japanese Laid-Open Patent Publication No. 11-242225

### SUMMARY OF INVENTION

### TECHNICAL PROBLEM

However, in a MVA mode liquid crystal display device which uses ribs (i.e., linear dielectric protrusions) as alignment control structures, liquid crystal molecules in the vicinity of the ribs incline relative to the direction normal to the substrate surface even in the absence of an applied voltage. This is a factor which causes leakage of light in the state of black display and deteriorates the contrast ratio (as will be described later with reference to the drawings FIG. **17** and FIG. **18**).

The present invention was conceived in order to solve the above problems. One of the objects of the present invention is to improve the contrast ratio of a MVA mode liquid crystal display device which includes ribs (linear dielectric protrusions) as the alignment control structures.

### SOLUTION TO PROBLEM

A liquid crystal display device of the present invention is a liquid crystal display device including a plurality of pixels, the liquid crystal display device including: a first substrate; a second substrate; a vertical alignment type liquid crystal layer interposed between the first substrate and the second substrate; a first electrode provided on a side of the first substrate which is closer to the liquid crystal; a second electrode provided on a side of the second substrate which is closer to the liquid crystal; and a pair of polarizing plates opposing each other with the liquid crystal layer interposed therebetween, the polarizing plates being in a crossed Nicols arrangement. Each of the plurality of pixels includes a plurality of first linear alignment control structures provided on the side of the first substrate which is closer to the liquid crystal layer and a plurality of second linear alignment control structures provided on the side of the second substrate which is closer to the liquid crystal layer. The plurality of first linear alignment control structures and the plurality of second linear alignment control structures each include a first component extending along a first axis and a second component extending along a second axis that is different from the first axis, each of the first axis and the second axis being an axis which bisects an angle between the polarization axes of the pair of polarizing plates. At least one group of the plurality of first linear alignment control structures and the plurality of second linear alignment control structures are a plurality of linear dielectric protrusions. The first component of the plurality of linear dielectric protrusions includes three or more first linear portions arranged along the first axis, the three or more first linear portions being arranged such that adjacent two of the three or more first linear portions form an angle of θ1 where $50° \leq \theta 1 < 180°$ and that a direction which bisects θ1 is generally perpendicular to the first axis. The second component of the plurality of linear dielectric protrusions includes three or more second linear portions arranged along the second axis, the three or more second linear portions being arranged such that adjacent two of the three or more second linear portions form an angle of θ2 where $50° \leq \theta 2 < 180°$ and that a direction which bisects θ2 is generally perpendicular to the second axis.

In one embodiment, the adjacent two first linear portions which define θ1 have equal lengths, and the adjacent two second linear portions which define θ2 have equal lengths.

In one embodiment, all of the three or more first linear portions and the three or more second linear portions have equal lengths.

In one embodiment, θ1 and θ2 are each independently not less than 74° and not more than 109°. More preferably, θ1 and θ2 are each independently not less than 85° and not more than 96°.

In one embodiment, $\theta 1 = \theta 2$.

In one embodiment, θ1 and θ2 are about 90°.

In one embodiment, the three or more first linear portions and the three or more second linear portions are arranged with the pitch of not more than 10 μm.

In one embodiment, the plurality of first linear alignment control structures are a plurality of slits provided in the first electrode, and the plurality of second linear alignment control structures are a plurality of linear dielectric protrusions provided on a side of the second electrode which is closer to the liquid crystal layer.

In one embodiment, one of the polarization axes of the pair of polarizing plates is identical with a horizontal direction of a display plane.

## ADVANTAGEOUS EFFECTS OF INVENTION

According to the present invention, the contrast ratio of a MVA mode liquid crystal display device which includes ribs (linear dielectric protrusions) as the alignment control structures can be improved. A liquid crystal display device of the present invention can be readily manufactured using a manufacture process of a conventional liquid crystal display device, except that the shape of the ribs is changed.

## BRIEF DESCRIPTION OF DRAWINGS

[FIG. **1**] **(a)** to **(d)** are schematic plan views each showing one pixel of liquid crystal display devices **100a, 100b, 100c,** and **100d** of the embodiment of the present invention.

[FIG. **2**] A schematic diagram that illustrates the relationship between the structure and the function of the rib **20a** shown in FIG. **1(a).**

[FIG. **3**] **(a)** is a schematic diagram which illustrates the relationship between the structure and the function of the rib **20c** shown in FIG. **1(c)**. **(b)** is a schematic diagram which illustrates the relationship between the structure and the function of the rib **20d** shown in FIG. **1(d).**

[FIG. **4**] A diagram showing a two-dimensional cross-sectional structure of a structural unit **100p** of a liquid crystal display device used in simulations.

[FIG. **5**] A diagram showing a linear rib **20** of a conventional MVA mode liquid crystal display device (Comparative Example) which is seen in a direction normal to the substrate.

[FIG. **6**] A plan view of a structural unit **100p** of a conventional liquid crystal display device (Comparative Example) used in simulations.

[FIG. **7**] **(a)** and **(b)** are diagrams showing the transmittance distributions within the structural unit **100p** which were obtained by the simulation of Comparative Example, **(a)** for the black displaying state (applied voltage: 0.0 V) and **(b)** for the white displaying state (applied voltage: 7.5 V).

[FIG. **8**] A plan view showing a stair-shaped rib **20A** of a structural unit **100p** of Example 1.

[FIG. **9**] **(a)** and **(b)** are diagrams showing the transmittance distributions within the structural unit **100p** which were obtained by the simulation of Example 1, **(a)** for the black displaying state (applied voltage: 0.0 V) and **(b)** for the white displaying state (applied voltage: 7.5 V).

[FIG. **10**] A plan view showing a stair-shaped rib **20B** of a structural unit **100p** of Example 2.

[FIG. **11] (a)** and **(b)** are diagrams showing the transmittance distributions within the structural unit **100p** which were obtained by the simulation of Example 2, **(a)** for the black displaying state (applied voltage: 0.0 V) and **(b)** for the white displaying state (applied voltage: 7.5 V).

[FIG. **12**] A plan view showing a stair-shaped rib **20C** of a structural unit **100p** of Example 3.

[FIG. **13**] **(a)** and **(b)** are diagrams showing the transmittance distributions within the structural unit **100p** which were obtained by the simulation of Example 3, **(a)** for the black displaying state (applied voltage: 0.0 V) and **(b)** for the white displaying state (applied voltage: 7.5 V).

[FIG. **14**] A plan view showing a stair-shaped rib **20D** of a structural unit **100p** of Example 4.

[FIG. **15**] **(a)** and **(b)** are diagrams showing the transmittance distributions within the structural unit **100p** which were obtained by the simulation of Example 4, **(a)** for the black displaying state (applied voltage: 0.0 V) and **(b)** for the white displaying state (applied voltage: 7.5 V).

[FIG. **16**] A graph illustrating the relationship between the vertex angle θ of an isosceles triangle which forms the stair-like shape and the contrast ratio.

[FIG. **17**] A schematic diagram which illustrates the azimuth of the orientations of liquid crystal molecules **30a** in the vicinity of a linearly-extending rib **20** in the conventional MVA mode liquid crystal display device.

[FIG. **18**] shows the result of a simulation of leakage of light in the black displaying state which may occur in the vicinity of the rib **20** shown in FIG. **17.**

## DESCRIPTION OF EMBODIMENTS

Hereinafter, a liquid crystal display device that is an embodiment of the present invention will be described with reference to the drawings. Note that, however, the present invention is not limited to examples of the liquid crystal display device of the embodiment which will be described below.

FIGS. **1(a)** to **1(d)** are schematic plan views each showing one pixel of liquid crystal display devices **100a, 100b, 100c,** and **100d** of the embodiment of the present invention.

The liquid crystal display device of the embodiment of the present invention is a MVA mode liquid crystal display device. Specifically, the liquid crystal display device includes a first substrate (e.g., a TFT substrate), a second substrate (e.g., a color filter substrate), a vertical alignment type liquid crystal layer interposed between the first substrate and the second substrate, a first electrode provided on a side of the first substrate which is closer to the liquid crystal layer (e.g., a pixel electrode), a second electrode provided on a side of the second substrate which is closer to the liquid crystal layer (a counter electrode), and a pair of polarizing plates in a crossed Nicols arrangement with the liquid crystal layer interposed therebetween. Here, the polarization axes of the pair of polarizing plates extend in the horizontal direction and the vertical direction, respectively.

A plurality of pixels of the liquid crystal display devices shown in FIGS. **1(a)** to **1(d)** respectively includes a plurality of first linear alignment control structures **10a** provided on a side of the first substrate which is closer to the liquid crystal layer and a plurality of second linear alignment control structures **20a, 20b, 20c, 20d** provided on a side of the second substrate which is closer to the liquid crystal layer.

The plurality of first linear alignment control structures **10a** and the plurality of second linear alignment control structures **20a, 20b, 20c, 20d** respectively include first components (**10a1, 20a1, 20b1, 20c1,** and **20d1**) extending along the first axis and second components (**10a2, 20a2, 20b2, 20c2,** and **20d2**) extending along the second axis that is different from the first axis. At least one group of the plurality of first linear alignment control structures and the plurality of second linear alignment control structures are a plurality of linear dielectric protrusions (hereinafter, referred to as "ribs"). The plurality of first linear alignment control structures **10a** and the plurality of second linear alignment control structures **20a, 20b, 20c, 20d** are arranged so as to alternate when seen in a direction vertical to the first substrate and the second substrate. This basic structure is the same as that of the conventional MVA mode liquid crystal display device (see Patent Document 1).

Each of the first axis and the second axis is an axis which generally bisects the angle between the polarization axes (transmission axes) of the pair of polarizing plates and is arranged so as to form angles of 45° with the two polarization axes of the pair of polarizing plates extending in the horizontal direction and the vertical direction in a display plane.

In the example described below, the plurality of first linear alignment control structures are a plurality of slits provided in the first electrode, and the plurality of second linear alignment control structures are a plurality of ribs provided on a side of the second electrode which is closer to the liquid crystal layer. At least one group of the plurality of first linear alignment control structures and the plurality of second linear alignment control structures may be a plurality of ribs. When both the first linear alignment control structures and the second linear alignment control structures are ribs, the effects of the present invention can be obtained by applying the present invention to at least one group of the first and second linear alignment control structures such that they have a stair-like shape as will be described later. Note that, to obtain a high contrast ratio, it is preferable that one group consists of slits and the other consists of ribs. Also, it is preferable in terms of manufacture process that the slits are provided in the pixel electrode and the ribs are provided on a side of the counter electrode which is closer to the liquid crystal layer.

In the pixel of the liquid crystal display device **100a** of the embodiment shown in FIG. **1(a),** the slit **10a** provided in the pixel electrode includes a first component **10a1** and a second component **10a2,** and the rib **20a** provided on a side of the counter electrode which is closer to the liquid crystal layer includes a first component **20a1** and a second component **20a2.** The first component **10a1** and the second component **10a2** of the slit **10a** each have a linear shape. The rib **20a** further includes a third component **20a3** which connects the first component **20a1** and the second component **20a2.** The direction in which the first components **10a1, 20a1** of the slit **10a** and the rib **20a** extend (the first axis) and the direction in which the second components **10a2, 20a2** of the slit **10a** and the rib **20a** extend (the second axis) are perpendicular to each other.

A feature of the pixel of the liquid crystal display device **100a** resides in that the first component **20a1** and the second component **20a2** of the rib **20a** each have a stair-like shape extending along the first axis or the second axis. The stair-like shape is formed by linking two sides (the two sides of equal lengths, the sides other than the base) of isosceles triangles with the vertex angle of 90°. The direction which bisects the vertex angle of the first component **20a1** of the rib **20a** is generally perpendicular to the first axis. The direction which bisects the vertex angle of the second component **20a2** is generally perpendicular to the second axis.

Also in the pixel of the liquid crystal display device **100b** shown in FIG. **1(b),** the slit **10a** provided in the pixel electrode includes the first component **10al** and the second component **10a2,** and the rib **20b** provided on a side of the counter electrode which is closer to the liquid crystal layer includes a first component **20b1** and a second component **20b2,** as in the pixel of the liquid crystal display device **100a.** The rib **20b** further includes a third component **20b3** which connects the first component **20b1** and the second component **20b2.** The direction in which the first components **10a1, 20b1** of the slit **10a** and the rib **20b** extend (the first axis) and the direction in which the second component **10a2, 20b2** of the slit **10a** and the rib **20b** extend (the second axis) are perpendicular to each other.

Also in the rib **20b** of the liquid crystal display device **100b,** the first component **20b1** and the second component **20b2** of the rib **20b** each have a stair-like shape extending along the first axis or the second axis. The stair-like shape of the rib **20b** of the liquid crystal display device **100b** is different from the rib **20a** of the liquid crystal display device **100a** in that the vertex portions of the right isosceles triangles are in the form of a circular arc. Although the vertex portions are in the form of a circular arc, the major part of the first component **20b1** and the second component **20b2** of the rib **20b** is constituted of two equal sides of an isosceles triangle with the vertex angle of 90° as in the rib **20a** of the liquid crystal display device **100a,** and the angle between these two sides is 90°. Referring to this angle as "vertex angle" for the convenience of description, the direction which bisects the vertex angle of the first component **20b1** of the rib **20b** is generally perpendicular to the first axis, and the direction which bisects the vertex angle of the second component **20b2** is generally perpendicular to the second axis.

Also in the pixel of the liquid crystal display device **100c** shown in FIG. **1(c),** the slit **10a** provided in the pixel electrode includes the first component **10a1** and the second component **10a2**, and the rib **20c** provided on a side of the counter electrode which is closer to the liquid crystal layer includes a first component **20c1** and a second component **20c2,** as in the pixel of the liquid crystal display device **100a.** The rib **20c** further includes a third component **20c3** which connects the first component **20c1** and the second component **20c2.** The direction in which the first components **10a1, 20c1** of the slit **10a** and the rib **20c** extend (the first axis) and the direction in which the second component **10a2, 20c2** of the slit **10a** and the rib **20c** extend (the second axis) are perpendicular to each other.

Also in the rib **20c** of the liquid crystal display device **100c,** the first component **20c1** and the second component **20c2** of the rib **20c** each have a stair-like shape extending along the first axis or the second axis. The stair-like shape of the rib **20c** of the liquid crystal display device **100c** is different from the rib **20a** of the liquid crystal display device **100a** in that the angle of the vertex of the right isosceles triangles is an obtuse angle (more than 90° and less than 180°). The direction which bisects the vertex angle of the first component **20c1** of the rib **20c** is generally perpendicular to the first axis, and the direction which bisects the vertex angle of the second component **20c2** is generally perpendicular to the second axis.

Also in the pixel of the liquid crystal display device **100d** shown in FIG. **1(d),** the slit **10a** provided in the pixel electrode includes the first component **10a1** and the second component **10a2,** and the rib **20d** provided on a side of the counter electrode which is closer to the liquid crystal layer includes a first component **20d1 and** a second component **20d2,** as in the pixel of the liquid crystal display device **100a.** The rib **20d** further includes a third component **20d3** which connects the first component **20d1** and the second component **20d2.** The direction in which the first components **10a1, 20d1** of the slit **10a** and the rib **20d** extend (the first axis) and the direction in which the second component **10a2, 20d2** of the slit **10a** and the rib **20d** extend (the second axis) are perpendicular to each other.

Also in the rib **20d** of the liquid crystal display device **100d,** the first component **20d1** and the second component **20d2** of the rib **20d** each have a stair-like shape extending along the first axis or the second axis. The stair-like shape of the rib **20d** of the liquid crystal display device **100d** is different from the rib **20a** of the liquid crystal display device **100a** in that the angle of the vertex of the right isosceles triangles is an acute angle (not less than 50° and less than 90°). The direction which bisects the vertex angle of the first component **20d1** of the rib **20d** is generally perpendicular to the first axis, and the direction which bisects the vertex angle of the second component **20d2** is generally perpendicular to the second axis.

Next, the function of the rib **20a** of the liquid crystal display device **100a** of the embodiment of the present invention, which has the stair-like shape, is described with reference to FIG. **2.**

FIG. **2** is a schematic diagram that illustrates the relationship between the structure and the function of the rib **20a. PA** denotes the polarization axis of one of the pair of polarizing plates in a crossed Nicols arrangement which is on the viewer side. **PP** denotes the polarization axis of the other polarizing plate which is on the rear side (backlight side).

As previously described, the rib **20a** includes the first component **20a1** and the second component **20a2.** The direction in which the first component **20a1** of the rib **20a** extends is represented by the first axis **L1.** The direction in which the second component **20a2** of the rib **20a** extends is represented by the second axis **L2.** The first axis **L1** and the second axis **L2** are perpendicular to each other. The first axis **L1** and the second axis **L2** bisect the angles between the polarization axes **PP** and **PA** (90°).

The first component **20a1** of the rib **20a** has a stair-like shape extending along the first axis **L1.** The second component **20a2** has a stair-like shape extending along the second axis **L2.** The first component **20a1** of the rib **20a** includes three or more first linear portions arranged along the first axis **L1.** Adjacent two of these first linear portions form an angle of $\theta a=90°$. The direction which bisects the angle θa is perpendicular to the first axis **L1.**

As for the first linear portions which constitute the first component **20a1** of the rib **20a,** the direction of rotation by which the angle θa between adjacent two first linear portions is defined (denoted by small arrows in FIG. **1**) alternately changes in the order of "clockwise", "counterclockwise", "clockwise", ..., along the first axis **L1** from the left upper part of FIG. **2,** for example, such that the stair-like shape extends along the first axis **L1.** The two adjacent first linear portions which define the angle θa have equal lengths.

Likewise, as for the second linear portions which constitute the second component **20a2** of the rib **20a,** the direction of rotation by which the angle θa between adjacent two second linear portions is defined (denoted by small arrows in FIG. **1**) alternately changes in the order of "counterclockwise", "clockwise", "counterclockwise", ..., along the second axis **L2** from the right upper part of FIG. **2**, for example, such that the stair-like shape extends along the second axis **L2.** The two adjacent second linear portions which define the angle θa have equal lengths. Note that the third component **20a3** that connects the first component **20a1** and the second component **20a2** is shared by the first component **20a1** and the second component **20a2** as apparent from FIG. **2.**

Thus, the rib **20a** is constituted of linear portions extending in the horizontal direction and linear portions extending in the vertical direction.

The alignment of liquid crystal molecules **30a** is regulated such that they incline in a direction perpendicular to the rib **20a.** Therefore, as shown in FIG. **2,** the azimuth of the inclination of the liquid crystal molecules **30a** alignment-regulated by linear portions of the rib **20a** which are parallel to the vertical direction is identical with the horizontal direction. The azimuth of the inclination of the liquid crystal molecules **30a** alignment-regulated by linear portions of the rib **20a** which are parallel to the horizontal direction is identical with the vertical direction. The liquid crystal molecules **30a** in a region between two adjacent linear portions are aligned with preserved continuity such that they conform to both the liquid crystal molecules **30a** alignment-regulated in the horizontal direction and the liquid crystal molecules **30a** alignment-regulated in the vertical direction. Thus, the liquid crystal molecules **30a** in this region are oriented in the direction which bisects the angle θa between two adjacent linear portions, i.e., in a direction perpendicular to the first axis **L1** or the second axis **L2.**

As a result, the liquid crystal molecules **30a** in regions which are somewhat distant from the rib **20a** are alignment-regulated by the stair-shaped first component **20a1** extending along the first axis **L1** such that they are oriented in two azimuths indicated by arrows **A** and **B** in FIG. **2** and are alignment-regulated by the stair-shaped second component **20a2** extending along the second axis **L2** such that they are oriented in two azimuths indicated by arrows **C** and **D** in FIG. **2.** Thus, as in the conventional MVA mode liquid crystal display device, four domains characterized by four directors that are represented by the four azimuths **A, B, C,** and **D are** formed.

It should be noted herein that the liquid crystal molecules **30a** alignment-regulated by the surface of the rib **20a** are oriented parallel or perpendicular to the polarization axis **PP.** Specifically, the liquid crystal molecules **30a** alignment-regulated by the surface of the rib **20a** do not retard (do not have a retardation for) linear polarization that enters the liquid crystal layer **30** after being transmitted through the polarizing plate with the polarization axis **PP.** Therefore, in the liquid crystal display device **100a,** no leakage of light occurs in the vicinity of the rib **20a** even in the black displaying state. Note that the same applies to the case where the arrangement of the polarization axes **PP** and **PA** of the pair of polarizing plates is contrary.

Now, the reasons why leakage of light occurs in the black displaying state in the conventional MVA mode liquid crystal display device are described with reference to FIGS. **17** and **18.**

FIG. **17** is a schematic diagram which illustrates the azimuth of the orientations of the liquid crystal molecules **30a** in the vicinity of a linearly-extending rib **20** in the conventional MVA mode liquid crystal display device. FIG. **18** shows the result of a simulation of leakage of light in the black displaying state which may occur in the vicinity of the rib **20.**

As shown in FIG. **17,** in the conventional MVA mode liquid crystal display device, the rib **20** is constituted of two linear portions extending in two mutually-orthogonal directions that bisect the angles between the polarization axes **PP** and **PA** of the pair of polarizing plates (90°). The whole shape of the rib **20** is a "<"-shape. Therefore, the liquid crystal molecules **30a** alignment-regulated by the surface of the rib **20** are oriented to form an angle of 45° with the polarization axis **PP.** Thus, the four directors with the azimuths **A** to **D** can be efficiently formed.

However, the alignment regulating force provided by the surface of the rib **20** is present even in the absence of an applied voltage, and therefore, the liquid crystal molecules **30a** in the vicinity of the rib **20** incline relative to a direction normal to the substrate surface even in the absence of an applied voltage. Since the azimuth of the inclination of the liquid crystal molecules **30a** forms an angle of 45° with (is not parallel or perpendicular to) the polarization axis **PP,** the liquid crystal molecules **30a** alignment-regulated by the surface of the rib **20a** retard (have a retardation for) linear polarization that enters the liquid crystal layer **30** after being transmitted through the polarizing plate with the polarization axis **PP.** As a result, in the conventional MVA mode liquid crystal display device, a bright area **BA** is formed along the rib **20** in the black displaying state as shown in FIG. **18,** so that leakage of light occurs. This leakage of light is a major factor which deteriorates the contrast ratio of the liquid crystal display device.

On the other hand, the rib **20a** of the liquid crystal display device **100a** of the embodiment of the present invention is constituted of linear portions which are parallel or perpendicular to the polarization axis **PP** as previously described. Therefore, the liquid crystal molecules **30a** alignment-regulated by the surface of the rib **20** do not retard linear polarization that enters the liquid crystal layer **30** after being transmitted through the polarizing plate with the polarization axis **PP.** Thus, no leakage of light occurs in the black displaying state.

The stair-like shape of the rib **20b** of the liquid crystal display device **100b** shown in FIG. **1(b)** is different from the rib **20a** of the liquid crystal display device **100a** in that the vertex portions of the right isosceles triangles are in the form of a circular arc. However, the rib **20b** functions in basically the same way as the rib **20a** of the liquid crystal display device **100a.** Note that the circular arc portion causes the liquid crystal molecules **30a** to orient in the azimuth which forms an angle of 45° with the polarization axis **PP.** The circular arc portion is preferably short. It is not absolutely necessary to provide the circular arc portion. Note that when photolithographically forming the rib **20a** of the liquid crystal display device **100a** using a photosensitive resin, for example, a circular arc portion may be formed.

Next, the functions of the rib **20c** of the liquid crystal display device **100c** and the rib **20d** of the liquid crystal display device **100d** are described with reference to FIGS. **3(a)** and **3(b).** FIG. **3(a)** is a schematic diagram which illustrates the relationship between the structure and the function of the rib **20c.** FIG. **3(b)** is a schematic diagram which illustrates the relationship between the structure and the function of the rib **20d.**

The stair-shaped rib **20c** shown in FIG. **3(a)** is different from the rib **20a** shown in FIG. **2** in that, as previously described, the angle between adjacent linear portions, θc, is an obtuse angle (more than 90° and less than 180°). As θc increases from 90°, the deviation of the angle between the linear portion of the rib **20c** and the polarization axis **PP** from 0° (parallel) or 90° (perpendicular) increases. As the deviation of the angle between the linear portions of the rib 20c and the polarization axis **PP** from 0° (parallel) or 90° (perpendicular) increases, the angle between the liquid crystal molecules alignment-regulated by the linear portions and the polarization axis **PP** from 0° (parallel) or 90° (perpendicular) increases, and accordingly, the leakage of light increases. If θc is less than 180°, the leakage of light can be reduced as compared with the conventional MVA mode liquid crystal display device which has the linear rib **20** shown in FIG. **17.** To sufficiently reduce the leakage of light, however, θc is preferably 109° or less (as will be described later with reference to FIG. **16).**

The stair-shaped rib **20d** shown in FIG. **3(b)** is different from the rib **20a** shown in FIG. **2** in that, as previously described, the angle between adjacent linear portions, θd, is an acute angle (not less than 50° and less than 90°). As θd decreases from 90°, the deviation of the angle between the linear portion of the rib **20d** and the polarization axis **PP** from 0° (parallel) or 90° (perpendicular) increases. As the deviation of the angle between the linear portions of the rib **20d** and the polarization axis **PP** from 0° (parallel) or 90° (perpendicular) increases, the angle between the liquid crystal molecules alignment-regulated by the linear portions and the polarization axis **PP** from 0° (parallel) or 90° (perpendicular) increases, and accordingly, the leakage of light increases. If θd is less than 90°, the leakage of light due to the increase in the length of the rib **20d** increases as θd decreases. As will be described later with reference to FIG. **16,** if θd is 50° or more, the leakage of light can be reduced as compared with the conventional MVA mode liquid crystal display device which has the linear rib **20** shown in FIG. **17.** However, to sufficiently reduce the leakage of light, θd is preferably 74° or more.

In the ribs **20c** and **20d** shown in FIGS. **3(a)** and **3(b),** the third components **20c3** and **20d3** respectively extend in a different direction from the first component or the second component and are not included in any of the first and second components. Both the components **20c3** and **20d3** are linear portions extending in the vertical direction and cause no leakage of light.

The ribs **20c** and **20d** shown in FIGS. **3(a)** and **3(b)** may have a circular arc portion between two adjacent linear portions as in the rib **20b** of FIG. **1(b).** Alternatively, the circular arc portion may be replaced by a gap.

In the above-described ribs **20a** to **20d,** the first component extending along the first axis **L1** and the second component extending along the second axis **L2** have substantially the same structure. Specifically, the first component and the second component are in a relationship of mirror images relative to a horizontal axis or in a relationship of rotation by 90°. However, the shape of the ribs is not limited to this configuration. The first component and the second component each may have any of the above-described shapes. Specifically, the ribs **20a, 20b, 20c,** and **20d** may be configured such that the first components **20a1, 20b1, 20c1,** and **20d1** of the ribs **20a, 20b, 20c,** and **20d** each have three or more first linear portions, that two adjacent first linear portions form an angle of θ1 where 50°≤θ1<180°, that the direction which bisects θ1 is generally perpendicular to the first axis, that the second components **20a2, 20b2, 20c2,** and **20d2** of the ribs **20a, 20b, 20c,** and **20d** each have three or more second linear portions, that two adjacent second linear portions form an angle of θ2 where 50°≤θ1<180°, and that the direction which bisects θ2 is generally perpendicular to the second axis.

As apparent from FIG. **2** and FIG. **3,** the directions which bisect angles θ1 and θ2 between two adjacent linear components are preferably perpendicular to corresponding one of the first axis **L1** or the second axis **L2.** Also, the two adjacent first linear portions which define θ1 preferably have equal lengths, and the two adjacent second linear portions which define θ2 preferably have equal lengths. In other words, if all of the above conditions are met, the alignment regulating forces exerted on liquid crystal molecules by two adjacent linear components are equal, so that the orientation of the liquid crystal molecules in a region between these linear components is coincident with the direction which bisects angle θ1, θ2 between the two adjacent linear components, and this orientation is coincident with a direction perpendicular to the first axis **L1** or the second axis **L2.** Note that, in order to obtain the effect of reducing leakage of light which is obtained by the stair-like shape of the rib, the direction which bisects angle θ1, θ2 between the two adjacent linear components does not need to be strictly perpendicular to corresponding one of the first axis **L1** or the second axis **L2.** Also, the two adjacent linear components may not have equal lengths.

Next, a configuration including the rib **20a** formed by two sides of right isosceles triangles which form vertex angles as previously described with reference to FIG. **1(a)** and FIG. **2** is examined as to the effects of the pitch and width of the rib **20a.** Note that the pitch of the rib **20a** refers to a pitch along the first axis **L1** or the second axis **L2** in which the stair-shaped rib **20a** extends. The width of the rib **20a** refers to the width of each linear portion (the length along a direction perpendicular to the direction in which the linear portion extends).

The relationship between the structure of the rib **20a** and the transmittance distribution was evaluated by simulation using three-dimensional liquid crystal director/electric field/optical computation software (*LCD Master* 3DFEM Version 4.8 manufactured by SHINTECH Inc.).

First, a simulation as to the transmittance distribution was performed on the conventional MVA mode liquid crystal display device with linear ribs, which is a comparative example.

FIG. **4** shows a two-dimensional cross-sectional structure of a structural unit **100p** of a liquid crystal display device used in the simulation. The structural unit **100p** used herein is part of one pixel. For example, it is part of one pixel which includes only the first component extending along the first axis of a rib (e.g., corresponding to reference numeral **20a1** of FIG. **1(a)**). The horizontal direction of FIG. **4** is perpendicular to the first axis **L1.**

In FIG. **4,** the structure includes, from the top, a polarizing plate **16,** a glass substrate **21,** a counter electrode (ITO film) **22,** the rib **20,** a liquid crystal layer **30,** a pixel electrode (ITO film) **12,** a glass substrate **11,** and a polarizing plate **15.** Vertical alignment films provided over the rib **20** and a side of the counter electrode **22** which is closer to the liquid crystal layer **30** and over a side of the pixel electrode **12** which is closer to the liquid crystal layer **30** are not shown herein.

The two-dimensional size of the structural unit **100p** was vertical × horizontal = 100 μm × 100 μm. The cell gap was 3.4 μm. The liquid crystal material was a negative-type nematic liquid crystal material. The retardation of the liquid crystal layer **30** was 320 nm. The pretilt angle of liquid crystal molecules at the interface in the absence of an applied voltage was 90°. The thickness of the ITO films of the counter electrode **22** and the pixel electrode **12** was 0 μm. The two-dimensional size of the counter electrode **22** was vertical × horizontal = 100 μm × 100 μm. The two-dimensional size of the pixel electrode **12** was vertical × horizontal = 100 μm × 64 μm. The reason why the lateral size of the pixel electrode **12** was smaller than the lateral size of the counter electrode **22** is that non-electrode portions on opposite sides of the pixel electrode **12** shown in FIG. **4** are adjusted to slits formed in the pixel electrode of an actual liquid crystal display device. Specifically, FIG. **4** shows, for example, a cross-sectional structure of a portion corresponding to a region shown in FIG. **1(a)** including the first component **20a1** of the rib **20a** and the first components **10a1** of the slits **10a** that are provided on opposite sides of the first component **20a1,** the cross-sectional structure being taken along a direction perpendicular to the first axis **L1** (see FIG. **2**). The polarization axes of the polarizing plates **15** and **16** extend in directions which form the angles of 45° with the first axis **L1.** The height of the rib was 1.2 μm. The relative dielectric constant of the rib was 3.7. The taper angle was 64.2°.

The common parameters used in the simulation are shown below in TABLE 1.

[TABLE 1]

| | |
|---|---|
| Height of Rib | 1.2 (μm) |
| Taper Angle of Rib | 64.2 (°) |
| Relative Dielectric Constant of Rib | 3.7 |
| Vertical Length of Counter Electrode | 100.0 (μm) |
| Horizontal Length of Counter Electrode | 100.0 (μm) |
| Thickness of Counter Electrode | 0.0 (μm) |
| Vertical Length of Pixel Electrode | 100.0 (μm) |
| Horizontal Length of Pixel Electrode | 64.0 (μm) |
| Thickness of Pixel Electrode | 0.0 (μm) |
| Cell Gap | 3.4 (μm) |
| Retardation of Liquid Crystal Layer | 320.0 (nm) |

First, as a comparative example, the simulation as to the transmittance distribution was performed on the conventional MVA mode liquid crystal display device with linear ribs.

FIG. **5** shows the linear rib **20** of the conventional MVA mode liquid crystal display device which is seen in a direction normal to the substrate. Note that, in this simulation, the 30μm areas at the top and the bottom of the structural unit **100p** were shielded by shields **62** as shown in FIG. **6.** This is for the purpose of removing the effects of oblique electric fields generated at the edge portions of the pixel electrode **12** and the counter electrode **22.** Note that the polarization axes **PP** and **PA** of the pair of polarizing plates form angles of 45° with the direction in which the rib **20** extends.

FIGS. **7(a)** and **7(b)** show the transmittance distributions within the structural unit **100p** which were obtained by the simulation of Comparative Example. FIG. **7(a)** shows the distribution for the black displaying state (applied voltage: 0.0 V) . FIG. **7(b)** shows the distribution for the white displaying state (applied voltage: 7.5 V).

As seen from FIG. **7(a),** two bright areas **BA** (leakage light) are clearly seen along the linear rib in the black displaying state. As seen from FIG. **7(b),** a dark area **DA** is formed in the region in which the rib is provided in the white displaying state. The liquid crystal molecules in the central part of the rib do not incline in any direction and maintain their orientations near to the vertical alignment, so that they are observed as the darkest line. The transmittance across the entire structural unit **100p** of Comparative Example was 0.000059 in the black displaying state, and 0.094548 in the white displaying state.

Note that, in the software *LCD Master,* the transmittance of the polarizing plates in a crossed Nicols arrangement is not 0% but is determined with consideration for leakage of light from the pair of polarizing plates. Here, the simulation intends to quantitatively evaluate the effect of improving leakage light which can be achieved by changing the shape of the rib, and therefore, leakage of light from the polarizing plates which is automatically considered in *LCD Master* is preferably omitted. The transmittance of 0.000030 for an applied voltage of 0.0 V, which was calculated by the simulation performed on the above-described configuration of Comparative Example from which however the rib was removed, was assumed as the transmittance of (leakage light from) the pair of polarizing plates, and 0.000030 was subtracted from the transmittance values obtained by simulations. The values from which the effect of leakage of light from the pair of polarizing plates in a crossed Nicols arrangement has not yet been removed are sometimes referred to as "pre-correction" values, and the values from which the effect of leakage of light has been removed are sometimes referred to as "post-correction" values.

Thus, the post-correction transmittance of Comparative Example, from which the effect of leakage of light from the pair of polarizing plates in a crossed Nicols arrangement has been removed, is 0.000029 (=0.000059-0.000030) in the black displaying state, and is 0.094518 (=0.094548-0.000030) in the white displaying state.

The black luminance, the white luminance, and the contrast ratio of the liquid crystal display device of Comparative Example were actually measured. The black luminance was 0.2020 [cd], the white luminance was 500 [cd], and the contrast ratio was 2475. As for the black luminance, 0.0910 [cd] out of 0.2020 [cd] is the amount of leakage light due to the rib. The remaining 0.111 [cd] is the total of leakage light from elements other than the rib, such as color filters, various bus lines, and slits of the pixel electrode. These values were obtained by actually measuring the black luminance of respective liquid crystal cells fabricated for evaluation, each of which includes the respective components.
Next, the simulation was performed on the structural units of Examples 1 to 4 with only the parameters relevant to the rib of the structural unit **100p** which have been previously described for Comparative Example being varied. The respective parameters of Examples are shown in TABLE 2. The results are shown in TABLE 3 and TABLE 4.
[TABLE 2]

| | Shape | Pitch (μm) | Width (μm) |
|---|---|---|---|
| Comparative | Linear | | 10.96 |
| Example 1 | Stair-shaped | 40 | 10.96 |
| Example 2 | Stair-shaped | 20 | 10.96 |
| Example 3 | Stair-shaped | 10 | 10.96 |
| Example 4 | Stair-shaped | 10 | 5.48 |

(Example 1)

In the structural unit **100p** of Example 1, the pitch of the stair-shaped rib **20A** was 40 μm as shown in FIG. **8.** The width and height of the rib **20A** were equal to those of Comparative Example. FIGS. **9(a)** and **9(b)** show the transmittance distributions within the structural unit **100p,** which were obtained by the simulation of Example 1. FIG. **9 (a)** shows the distribution for the black displaying state (applied voltage: 0.0 V). FIG. **9(b)** shows the distribution for the white displaying state (applied voltage: 7.5 V).
As seen from FIG. **9(a),** the bright area **BA** which was formed due to the rib was distributed in the form of dots, whereas it was linear in Comparative Example (see FIG. **7(a)**). The bright area **BA** in the form of dots was formed at positions corresponding to the vertexes of the stair-like shape. As a result, the transmittance value of the entire structural unit **100p** of Example 1 was 0.000001 in the black displaying state, which means an improvement of about 97% as compared with Comparative Example.
On the other hand, the transmittance in the white displaying state was 0.060394, which was smaller than that of Comparative Example by about 36%. This is because, as understood from FIG. **9(b),** large part of the liquid crystal molecules in the vicinity of the rib are more susceptible to the alignment regulating force of the rib, so that they cannot sufficiently respond to electric fields and maintain themselves oriented in a direction parallel to or perpendicular to the polarization axis **PP.**
From the transmittance obtained by simulation, the black luminance, the white luminance, and the contrast ratio were calculated as described below.

Black Luminance

= ((Amount of Leakage Light from Rib of Comparative Example)×(Transmittance of Example 1 in Black Displaying State)/(Transmittance of Comparative Example in Black Displaying State))+(Amount of Leakage Light from Non-rib Elements)

$$= (0.0910 \times 0.000001/0.000029) + 0.111 = 0.1141 \text{ [cd]}$$

White Luminance

= ((White Luminance of Comparative Example) ×(Transmittance of Example 1 in White Displaying State)/(Transmittance of Comparative Example in White Displaying State))

$$= 500 \times 0.060394/0.094518 = 320 \text{ [cd]}$$

Contrast Ratio

$$= 320 \text{ [cd]}/0.1141 \text{ [cd]} = 2800$$

Thus, in Example 1, the black luminance decreased from 0.2020 to 0.1141 [cd], which was a decrease of about 43%, although the white luminance decreased from 500 to 320 [cd], which was a decrease of about 36%. Accordingly, the contrast ratio increased from 2475 to 2800, which was an increase of about 13%.

(Example 2)

In the structural unit **100p** of Example 2, the pitch of the stair-shaped rib **20B** was 20 μm as shown in FIG. **10.** The width and height of the rib **20B** were equal to those of Comparative Example. FIGS. **11(a)** and **11(b)** show the transmittance distributions within the structural unit **100p,** which were obtained by the simulation of Example 2. FIG. **11 (a)** shows the distribution for the black displaying state (applied voltage: 0.0 V). FIG. **11(b)** shows the distribution for the white displaying state (applied voltage: 7.5 V).

As seen from FIG. **11(a),** the bright area **BA** which was formed due to the rib was distributed in the form of dots, whereas it was linear in Comparative Example (see FIG. **7(a)**). The number of dots of the bright area **BA** was larger than that of Example 1 (FIG. **9(a)**) because of the increased number of steps of the stair. However, the transmittance value in the black displaying state was 0.000001, which was equal to that of Example 1 and which means an improvement of about 97% as compared with Comparative Example.

On the other hand, the transmittance in the white displaying state was 0.080629, which was smaller than that of Comparative Example by about 15%. However, the rate of decrease was lower than that of Example 1. This is because, as understood from FIG. **11(b),** the extent in which the alignment regulating force of the rib **20B** was operative decreased due to the increased number of steps of the stair, and accordingly, the number of liquid crystal molecules which maintain their orientations parallel or perpendicular to the polarization axis **PP** decreased, so that the response of the liquid crystal molecules was improved.

From the transmittance obtained by simulation, the black luminance, the white luminance, and the contrast ratio were calculated as described above. The black luminance was 0.1141 [cd]. The white luminance was 432 [cd]. The contrast ratio was 3737. The black luminance was equal to that of Example 1. The white luminance was smaller than that of Comparative Example by about 15%. However, the contrast ratio was higher than that of Comparative Example by about 51%.

(Example 3)

In the structural unit **100p** of Example 3, the pitch of the stair-shaped rib **20C** was 10 μm as shown in FIG. **12.** The width and height of the rib **20C** were equal to those of Comparative Example. FIGS. **13(a)** and **13(b)** show the transmittance distributions within the structural unit **100p,** which were obtained by the simulation of Example 3. FIG. **13 (a)** shows the distribution for the black displaying state (applied voltage: 0.0 V). FIG. **13(b)** shows the distribution for the white displaying state (applied voltage: 7.5 V).

As seen from FIG. **13(a),** the bright area **BA** was distributed in the form of dots as in Examples 1 and 2. The number of dots of the bright area **BA** was still larger than that of the rib **20B** of Example 2 because of the still increased number of steps of the stair. The transmittance value in the black displaying state was 0.000003, which means an improvement of about 90% as compared with Comparative Example.

On the other hand, the transmittance in the white displaying state was 0.088755, which was smaller than that of Comparative Example by about 6%. The rate of decrease was still lower than that of Example 2. This is because, as understood from FIG. **13(b),** the extent in which the alignment regulating force of the rib **20C** was operative further decreased due to the still increased number of steps of the stair, so that the response of the liquid crystal molecules was improved.

From the transmittance obtained by simulation, the black luminance, the white luminance, and the contrast ratio were calculated as described above. The black luminance was 0.1204 [cd]. The white luminance was 470 [cd]. The contrast ratio was 3899. The black luminance was slightly smaller than those of Examples 1 and 2. However, the rate of decrease of the white luminance was only about 6% relative to Comparative Example. The contrast ratio increased by about 58%.

(Example 4)

In the structural unit **100p** of Example 4, as shown in FIG. **14,** the pitch of the stair-shaped rib **20D** was 10 μm, and the width of the rib **20D** was a half of that of Comparative Example. The height of the rib **20D** was equal to that of Comparative Example. FIGS. **15(a)** and **15(b)** show the transmittance distributions within the structural unit **100p,** which were obtained by the simulation of Example 4. FIG. **15(a)** shows the distribution for the black displaying state (applied voltage: 0.0 V). FIG. **15(b)** shows the distribution for the white displaying state (applied voltage: 7.5 V).

As seen from FIG. **15(a),** the number of dots of the bright area **BA** was still larger as in Example 3. The transmittance value in the black displaying state was 0.000004, which means an improvement of about 86% as compared with Comparative Example.

On the other hand, the transmittance in the white displaying state was 0.094034, which was smaller than that of Comparative Example by about 0.5%. The rate of decrease was still lower than that of Example 3. This is because, as understood from FIG. **15(b),** the extent in which the alignment regulating force of the rib **20D** was operative further decreased as compared with Example 3, so that the response of the liquid crystal molecules was further improved.

From the transmittance obtained by simulation, the black luminance, the white luminance, and the contrast ratio were calculated. The black luminance was 0.1236 [cd]. The white luminance was 497 [cd]. The contrast ratio was 4021. The black luminance was slightly smaller than those of Examples 1 to 3. However, the rate of decrease of the white luminance was only about 0.5% relative to Comparative Example, which can be considered as a minor error. The contrast ratio was improved by as much as about 62%.

The results of the simulations of Comparative Example and Examples 1 to 4 are shown together in TABLE 3 and TABLE 4.

[TABLE 3]

| | RIB | | | TRANSMITTANCE (PRE-CORRECTION) | | TRANSMITTANCE (POST-CORRECTION)*1 | |
|---|---|---|---|---|---|---|---|
| | SHAPE | WIDTH (μm) | PITCH (μm) | 0.0V | 7.5V | 0.0V | 7.5V |
| COMPARATIVE EXAMPLE WITHOUT RIB | NONE | | | 0.000030 | | | |
| COMPARATIVE EXAMPLE | LINEAR | 10.96 | | 0.000059 | 0.094548 | 0.000029 | 0.094518 |
| EXAMPLE 1 | STAIR-SHAPED | 10.96 | 40 | 0.000031 | 0.060424 | 0.000001 | 0.060394 |
| EXAMPLE 2 | STAIR-SHAPED | 10.96 | 20 | 0.000031 | 0.080659 | 0.000001 | 0.080629 |
| EXAMPLE 3 | STAIR-SHAPED | 10.96 | 10 | 0.000033 | 0.088785 | 0.000003 | 0.088755 |
| EXAMPLE 4 | STAIR-SHAPED | 5.48 | 10 | 0.000034 | 0.094064 | 0.000004 | 0.094034 |

*1 The value of transmittance (pre-correction) minus transmittance of Comparative Example without rib (=0.000030).

[TABLE 4]

| | BLACK LUMINANCE | | WHITE LUMINANCE | | CONTRAST RATIO | |
|---|---|---|---|---|---|---|
| | LEAKAGE LIGHT DUE TO RIB (cd) | TOTAL OF LEAKAGE LIGHT *2 (cd) | (cd) | RATE OF DECREASE (%) | | RATE OF INCREASE (%) |
| COMPARATIVE EXAMPLE | 0.0910 | 0.2020 | 500 | 0.00 | 2475 | 0.00 |
| EXAMPLE 1 | 0.0031 | 0.1141 | 320 | 36.09 | 2800 | 13.10 |
| EXAMPLE 2 | 0.0031 | 0.1141 | 427 | 14.69 | 3737 | 50.98 |
| EXAMPLE 3 | 0.0094 | 0.1204 | 470 | 6.10 | 3899 | 57.53 |
| EXAMPLE 4 | 0.0126 | 0.1236 | 497 | 0.51 | 4021 | 62.46 |

*2 Including total of leakage light from non-rib elements, such as color filters, bus lines, and ITO electrode slits (=0.111[cd]).

As apparent from the above descriptions, the stair-shaped rib preferably has a smaller pitch. It is preferably not more than 10 μm. The rib preferably has a smaller width. It is preferably less than 10 μm, and is more preferably not more than 6 μm.

In the configuration described above, the rib **20a** is formed by two sides which form vertex angles (θa=90°) of right isosceles triangles as described with reference to FIG. **1(a)** and FIG. **2.** Next, the preferable range of the vertex angle θ of the isosceles triangles which form the stair-like shape is described with reference to FIG. **16.**

Black luminance values obtained from the above results of Comparative Example (θ=180°) and Example 4 (θ=90°) are:

Black Luminance MAX = Black Luminance (180°) = 0.0910[cd];
Black Luminance MIN = Black Luminance (90°) = 0.0126[cd]; and
Δ Black Luminance = Black Luminance (180°)-Black Luminance (90°) = 0.0784[cd].

Black Luminance (θ), which is a function of the vertex angle θ, is given as Black Luminance (θ) = Black Luminance (90°)+ΔBlack Luminance×$\cos^2\theta/\cos(90°-\theta/2)$ + (Amount of Leakage Light from Non-rib Elements).

Here, in the term of ΔBlack Luminance × $\cos^2\theta/\cos(90°-\theta/2)$, "$\cos^2\theta$" represents the change in leakage light due to the deviation of the angle between the rib (entirely constituted of linear portions) and the polarization axis **PP** from 0° (parallel) or 90° (perpendicular), and "$\cos(90°-\theta/2)$" represents the length of the rib which depends on the vertex angle θ. By replacing "Black Luminance (90°)", "ΔBlack Luminance", and "Amount of Leakage Light from Non-rib Elements" with the above values and using $\cos(90°-\theta/2)=\sin(\theta/2)$, Black Luminance (θ) can be expressed as:

$$\text{Black Luminance }(\theta) = 0.0126+0.0784\cos^2\theta/\sin(\theta/2)+0.111\,[\text{cd}] = 0.1236+0.0784\cos^2\theta/\sin(\theta/2)\,[\text{cd}].$$

White luminance values obtained in the same way from the above results of Comparative Example (θ=180°) and Example 4 (θ=90°) are:

White Luminance MAX = White Luminance (180°) = 500[cd];
White Luminance MIN = White Luminance (90°) = 497[cd]; and
Δ White Luminance = White Luminance (180°)-White Luminance (90°) = 3 [cd] .

Here, the dependence of the white luminance on the vertex angle θ is small (3 cd corresponds to 0.6%). Thus, the white luminance is approximated at a constant value of 500 cd irrespective of the vertex angle θ.

The contrast ratio is given as White Luminance/Black Luminance. Thus,

$$\text{Contrast Ratio }(\theta) = 500/\{0.1236+0.0784\cos^2\theta/\sin(\theta/2)\}.$$

FIG. **16** is a graph in which the contrast ratio (θ) is plotted over the vertex angle θ. Note that, when θ<50°, the contrast ratio is not more than the contrast ratio of Comparative Example, 2475, and hence, the graph shows the contrast ratio within the range of θ≥50°.

In the stair-shaped rib, if the angle between the rib and the polarization axis **PP** deviates from 0° (parallel) or 90° (perpendicular), the amount of leakage light increases. When θ<90°, the length of the rib increases, and accordingly, the amount of leakage light increases. Therefore, the graph of FIG. **16** is not symmetrical about θ=90°. In the range of θ<90°, the change in contrast ratio is sharper than in the range of θ>90°. Around θ=50°, the contrast ratio is equal to that of Comparative Example.

As understood from FIG. **16,** in the range of 74°≤θ≤109°, the contrast ratio which can be achieved herein is not less than 1.5 times the contrast ratio of Comparative Example, 2475. In the range of 85°≤θ≤96°, a high contrast ratio can be obtained such that the decrease from the maximum contrast ratio which can be obtained in Example 4 is 1% or less.

Note that, as the vertex angle θ decreases, the difference between the orientation (azimuth) of the liquid crystal molecules in the vicinity of the rib and the orientation (azimuth) of the liquid crystal molecules in the vicinity of the slit increases. When the difference of the orientations of the liquid crystal molecules is large, the orientations of the liquid crystal molecules in the white displaying state deviate from the azimuths of 45° relative to the polarization axes, so that the viewing angle characteristics deteriorate. Therefore, the vertex angle θ is preferably determined with consideration for the balance between the contrast ratio and the viewing angle characteristics. For example, to achieve a contrast ratio not less than 1.5 times the contrast ratio of Comparative Example, the range of $85° \leq \theta \leq 109°$ is preferable.

The results shown herein are for the case where the first component and the second component of the stair-shaped rib extending in mutually orthogonal directions have equal vertex angles ($\theta 1=\theta 2$) as shown in FIGS. **1(a)** to **1 (d).** However, as a matter of course, the preferable range of the vertex angle θ may be determined independently in each case.

## INDUSTRIAL APPLICABILITY

The present invention is applicable to a wide variety of conventional MVA mode liquid crystal display devices, typically including TV applications.

## REFERENCE SIGNS LIST

| | |
|---|---|
| **10a** | first linear alignment control structure (slit) |
| **10a1** | first component of first linear alignment control structure |
| **10a2** | second component of first linear alignment control structure |
| **11, 21** | glass substrate |
| **12** | pixel electrode (ITO film) |
| **15, 16** | polarizing plate |
| **20** | rib |
| **20a, 20b, 20c, 20d** | second linear alignment control structure (stair-shaped rib) |
| **20a1, 20b1, 20c1, 20d1** | first component of second linear alignment control structure |
| **20a2, 20b2, 20c2, 20d2** | second component of second linear alignment control structure |
| **20a3, 20b3, 20c3, 20d3** | third component of second linear alignment control structure |
| **22** | counter electrode (ITO film) |
| **30** | liquid crystal layer |
| **30a** | liquid crystal molecules |
| **100a, 100b, 100c, 100d** | liquid crystal display device |
| **100p** | structural unit (part of pixel) |
| **L1** | first axis |
| **L2** | second axis |

## Claims

**1.** A liquid crystal display device including a plurality of pixels, comprising: a first substrate; a second substrate; a vertical alignment type liquid crystal layer interposed between the first substrate and the second substrate; a first electrode provided on a side of the first substrate which is closer to the liquid crystal layer; a second electrode provided on a side of the second substrate which is closer to the liquid crystal layer; and a pair of polarizing plates opposing each other with the liquid crystal layer interposed therebetween, the polarizing plates being in a crossed Nicols arrangement,
wherein each of the plurality of pixels includes a plurality of first linear alignment control structures provided on the side of the first substrate which is closer to the liquid crystal layer and a plurality of second linear alignment control structures provided on the side of the second substrate which is closer to the liquid crystal layer,
the plurality of first linear alignment control structures and the plurality of second linear alignment control structures each include a first component extending along a first axis and a second component extending along a second axis that is different from the first axis, each of the first axis and the second axis being an axis which bisects an angle between the polarization axes of the pair of polarizing plates,
at least one group of the plurality of first linear alignment control structures and the plurality of second linear alignment control structures are a plurality of linear dielectric protrusions,
the first component of the plurality of linear dielectric protrusions includes three or more first linear portions arranged along the first axis, the three or more first linear portions being arranged such that adjacent two of the three or more first linear portions form an angle of θ1 where $50° \leq \theta 1 < 180°$ and that a direction which bisects θ1 is generally perpendicular to the first axis, and

the second component of the plurality of linear dielectric protrusions includes three or more second linear portions arranged along the second axis, the three or more second linear portions being arranged such that adjacent two of the three or more second linear portions form an angle of θ2 where $50° \leq \theta 2 < 180°$ and that a direction which bisects θ2 is generally perpendicular to the second axis.

**2.** The liquid crystal display device of claim 1, wherein the adjacent two first linear portions which define θ1 have equal lengths, and the adjacent two second linear portions which define θ2 have equal lengths.

**3.** The liquid crystal display device of claim 2, wherein all of the three or more first linear portions and the three or more second linear portions have equal lengths.

**4.** The liquid crystal display device of any of claims 1 to 3, wherein θ1 and θ2 are each independently not less than 74° and not more than 109°.

**5.** The liquid crystal display device of claim 4, wherein θ1 and θ2 are each independently not less than 85° and not more than 96°.

**6.** The liquid crystal display device of any of claims 1 to 5, wherein $\theta 1 = \theta 2$.

**7.** The liquid crystal display device of claim 6, wherein θ1 and θ2 are about 90°.

**8.** The liquid crystal display device of any of claims 1 to 7, wherein the three or more first linear portions and the three or more second linear portions are arranged with the pitch of not more than 10 μm.

**9.** The liquid crystal display device of any of claims 1 to 8, wherein the plurality of first linear alignment control structures are a plurality of slits provided in the first electrode, and the plurality of second linear alignment control structures are a plurality of linear dielectric protrusions provided on a side of the second electrode which is closer to the liquid crystal layer.

**10.** The liquid crystal display device of any of claims 1 to 9, wherein one of the polarization axes of the pair of polarizing plates is identical with a horizontal direction of a display plane.

*FIG.1*

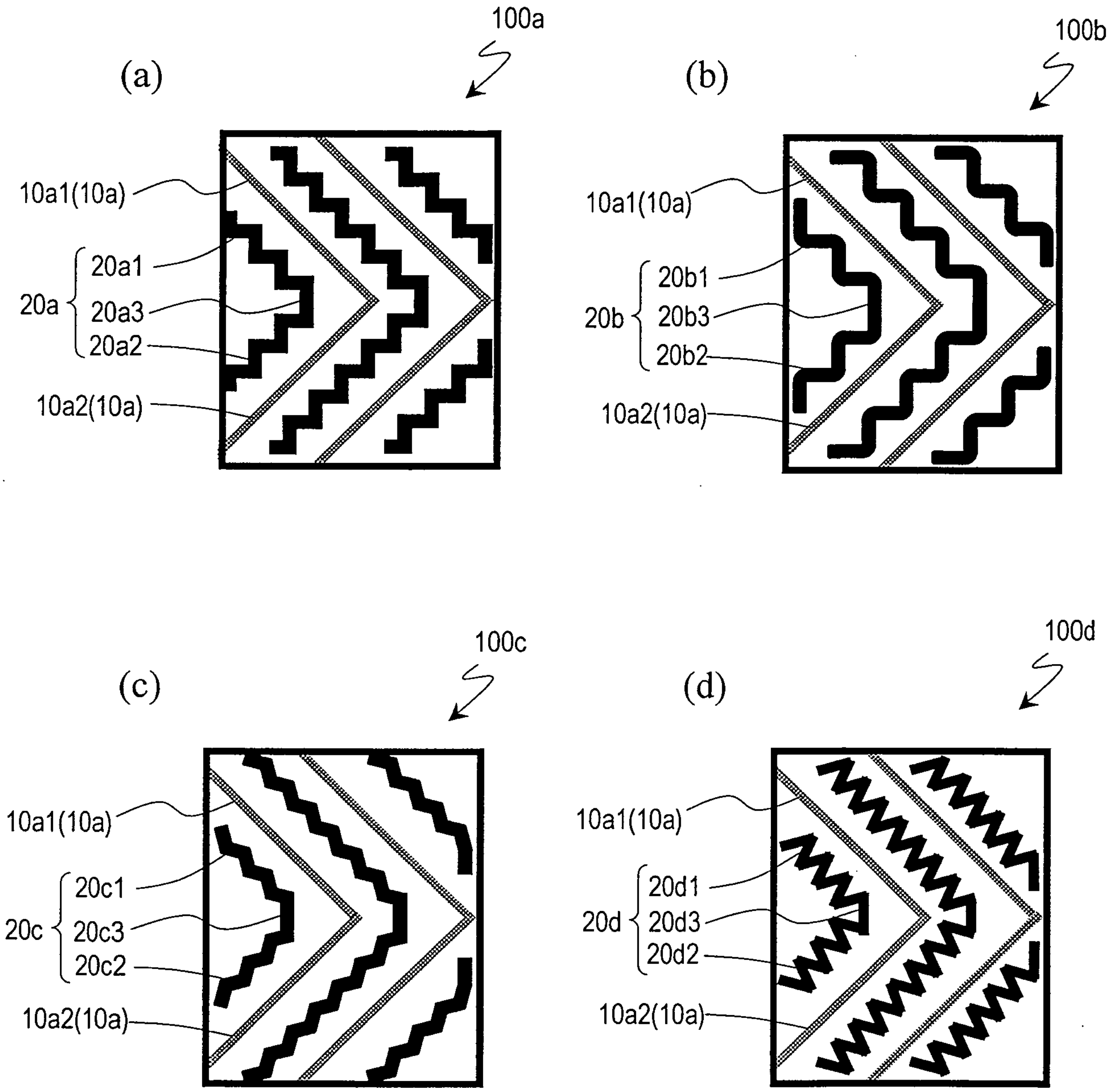
(a)
100a
10a1(10a)
20a1
20a
20a3
20a2
10a2(10a)
(b)
100b
10a1(10a)
20b1
20b
20b3
20b2
10a2(10a)
(c)
100c
10a1(10a)
20c1
20c
20c3
20c2
10a2(10a)
(d)
100d
10a1(10a)
20d1
20d
20d3
20d2
10a2(10a)

*FIG.2*

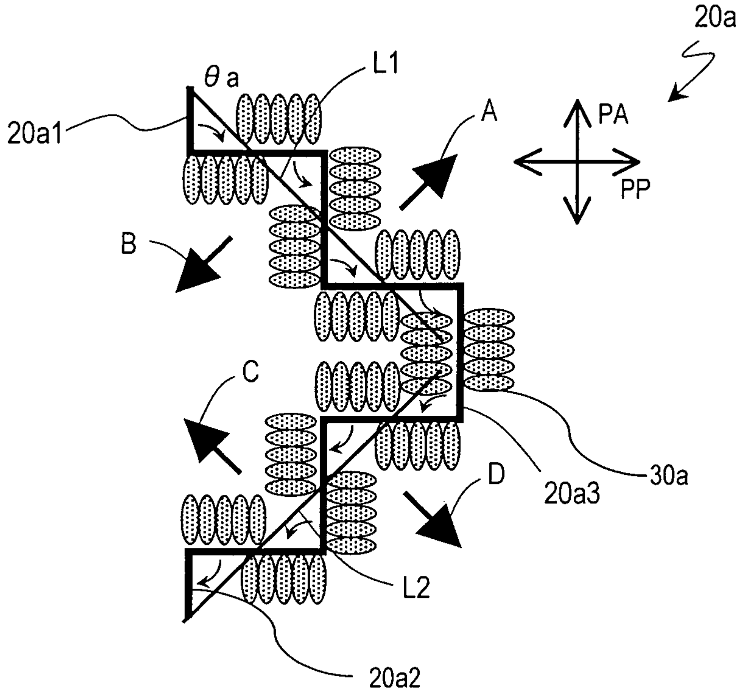
20a
θa
L1
20a1
A
PA
PP
B
C
D
20a3
30a
L2
20a2

*FIG.3*

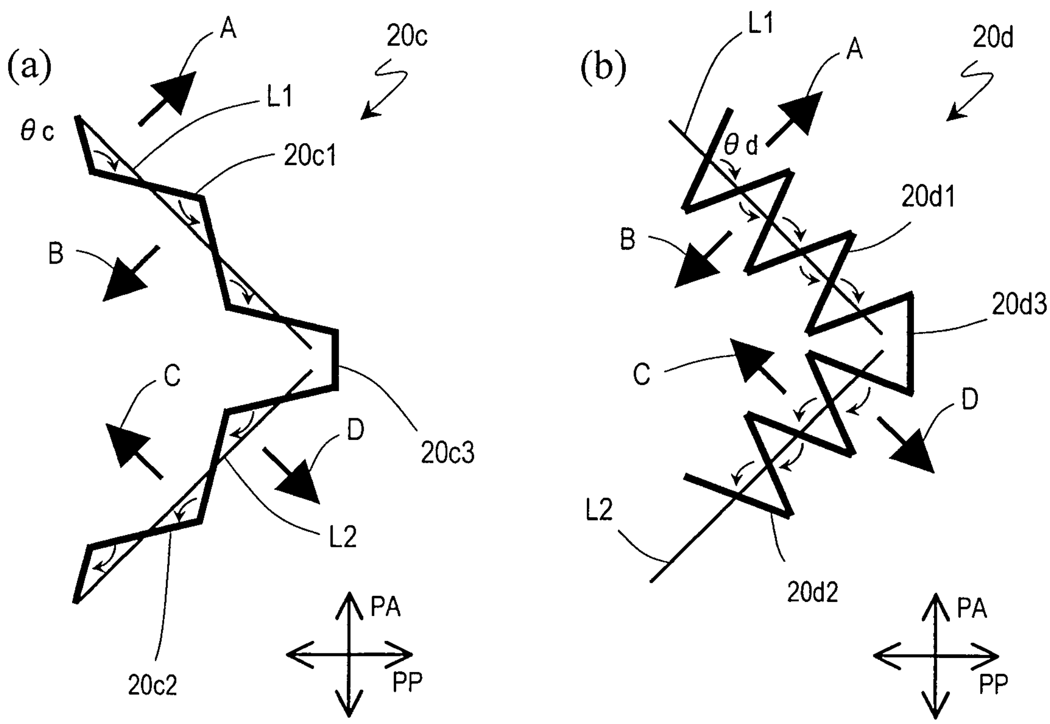
(a)
A
20c
L1
θc
20c1
B
20c3
C
D
L2
20c2
PA
PP
(b)
L1
A
20d
θd
20d1
B
20d3
C
D
L2
20d2
PA
PP

FIG.4

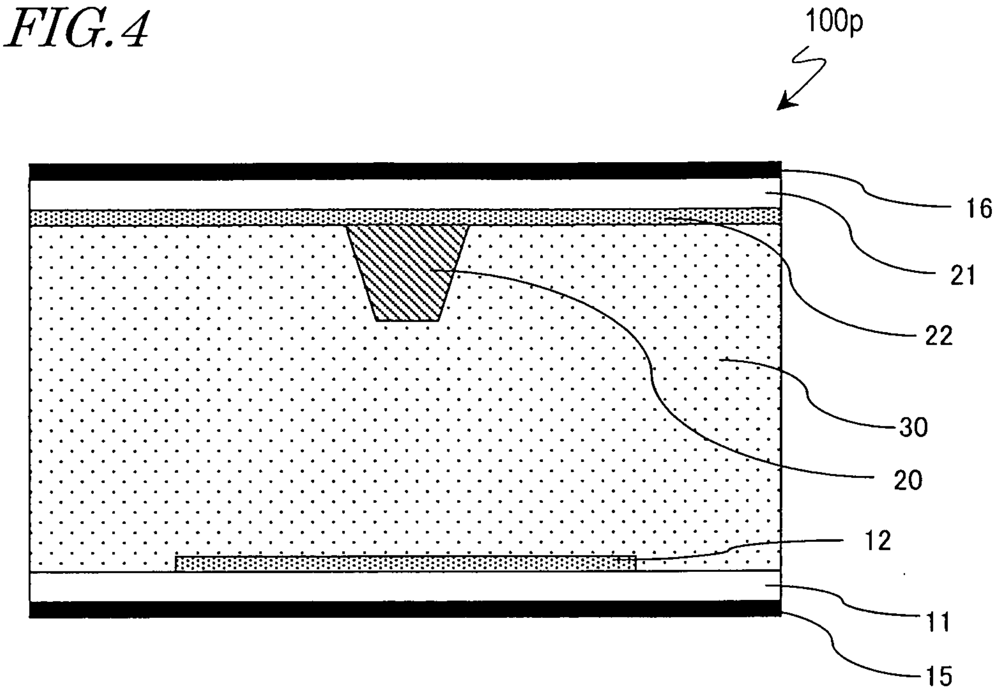
100p
16
21
22
30
20
12
11
15

FIG.5

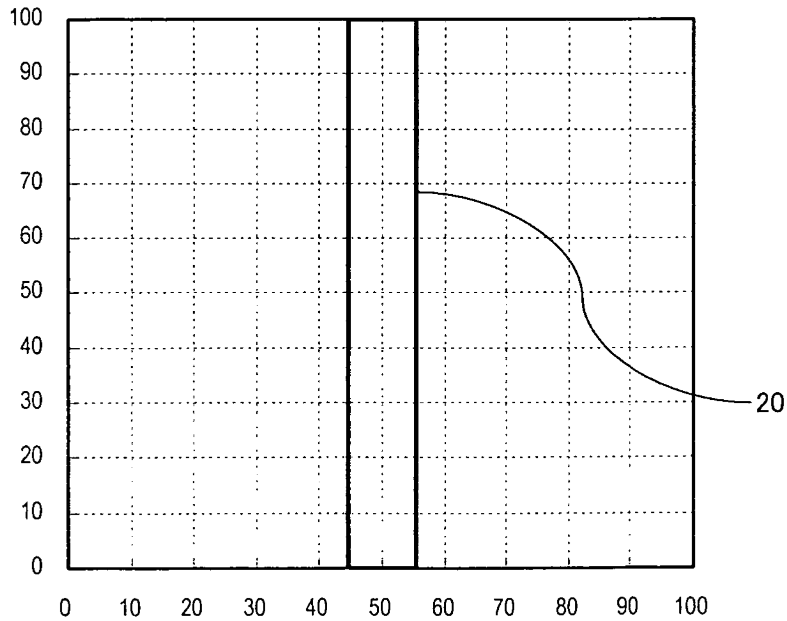
100
90
80
70
60
50
40
30
20
10
0
0
10
20
30
40
50
60
70
80
90
100
20

*FIG.6*

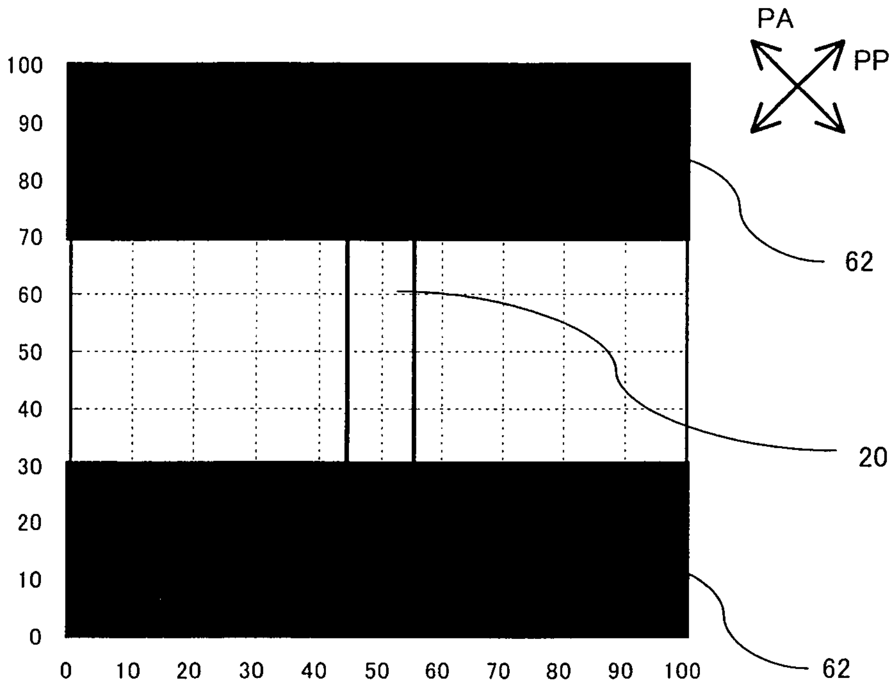
PA
PP
100
90
80
70
60
50
40
30
20
10
0
0
10
20
30
40
50
60
70
80
90
100
62
20
62

*FIG. 7*

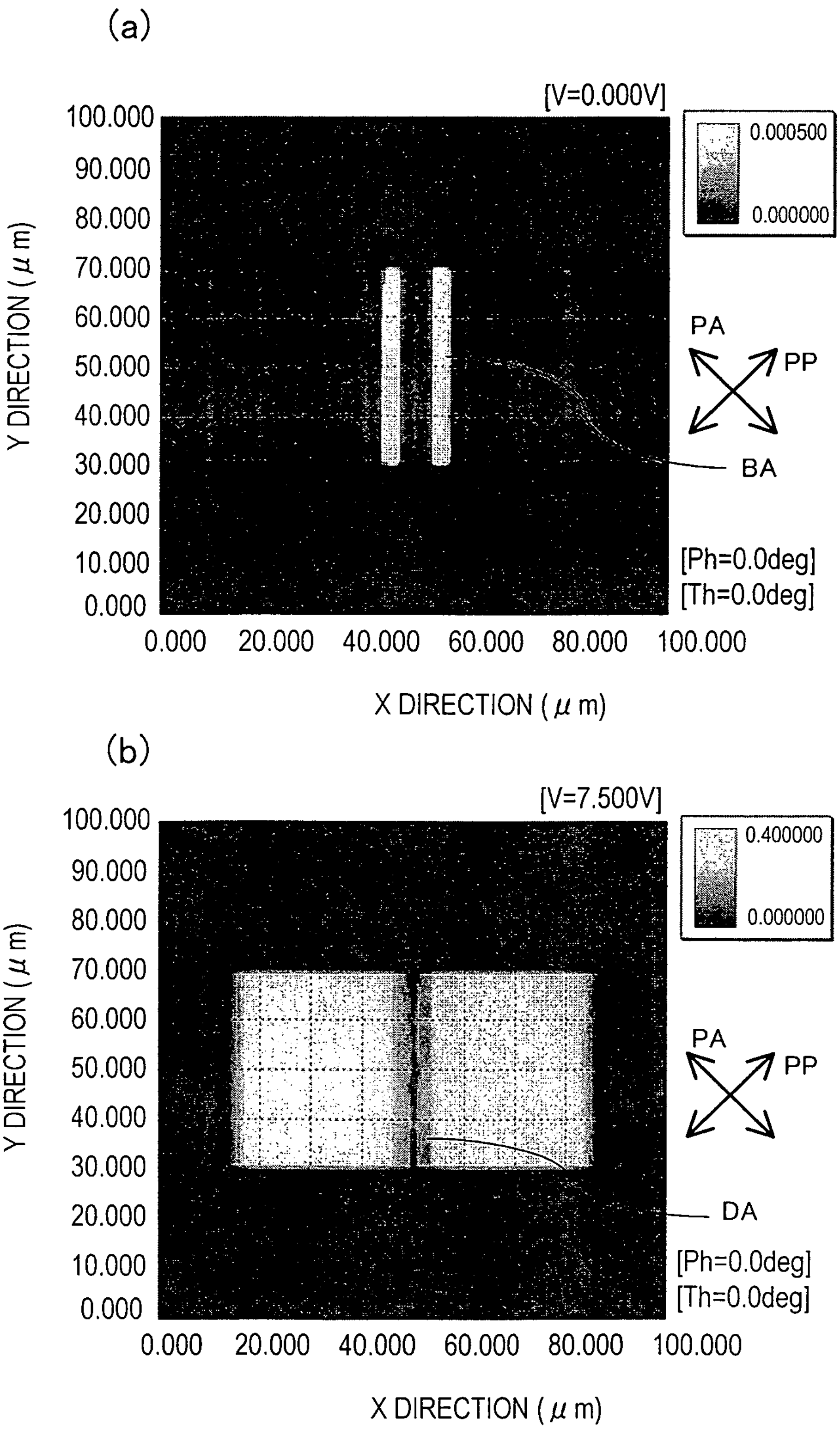
(a)
[V=0.000V]
0.000500
0.000000
Y DIRECTION (μm)
100.000
90.000
80.000
70.000
60.000
50.000
40.000
30.000
20.000
10.000
0.000
PA
PP
BA
[Ph=0.0deg]
[Th=0.0deg]
0.000 20.000 40.000 60.000 80.000 100.000
X DIRECTION (μm)
(b)
[V=7.500V]
0.400000
0.000000
Y DIRECTION (μm)
100.000
90.000
80.000
70.000
60.000
50.000
40.000
30.000
20.000
10.000
0.000
PA
PP
DA
[Ph=0.0deg]
[Th=0.0deg]
0.000 20.000 40.000 60.000 80.000 100.000
X DIRECTION (μm)

*FIG.8*

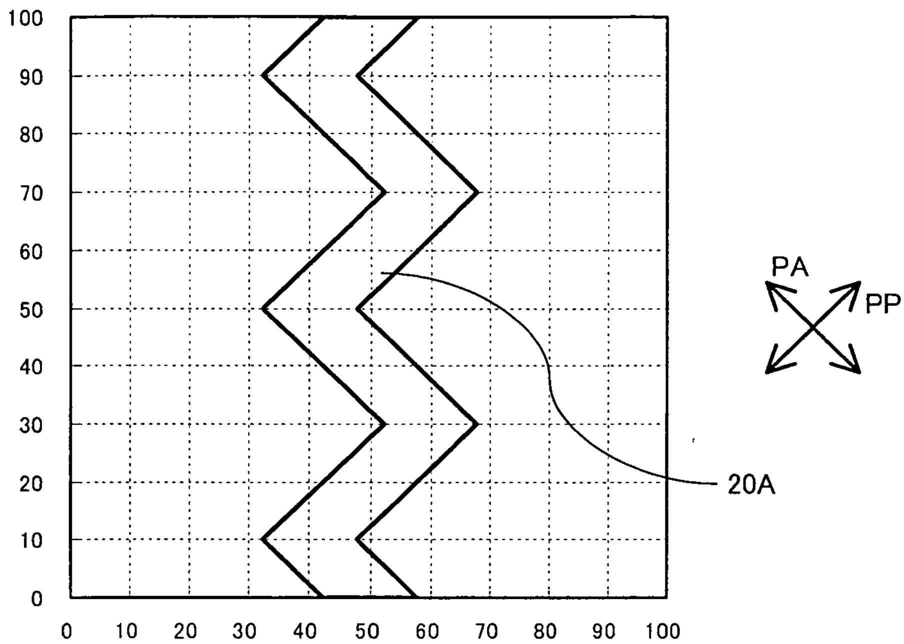
100
90
80
70
60
50
40
30
20
10
0
0
10
20
30
40
50
60
70
80
90
100
PA
PP
20A

*FIG.9*

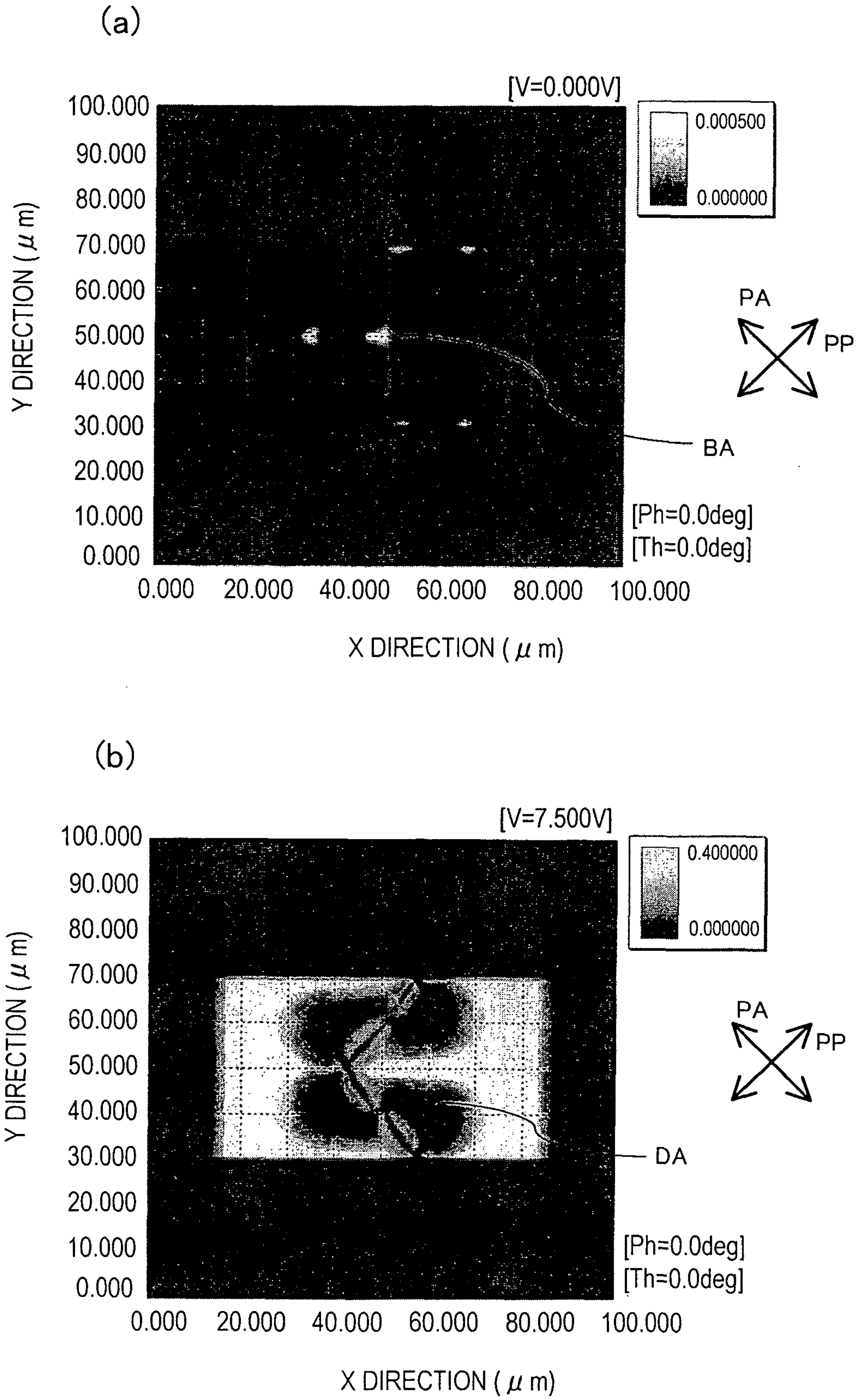
(a)
[V=0.000V]
0.000500
0.000000
100.000
90.000
80.000
70.000
60.000
50.000
40.000
30.000
20.000
10.000
0.000
Y DIRECTION (μ m)
0.000 20.000 40.000 60.000 80.000 100.000
X DIRECTION (μ m)
PA
PP
BA
[Ph=0.0deg]
[Th=0.0deg]
(b)
[V=7.500V]
0.400000
0.000000
100.000
90.000
80.000
70.000
60.000
50.000
40.000
30.000
20.000
10.000
0.000
Y DIRECTION (μ m)
0.000 20.000 40.000 60.000 80.000 100.000
X DIRECTION (μ m)
PA
PP
DA
[Ph=0.0deg]
[Th=0.0deg]

*FIG.10*

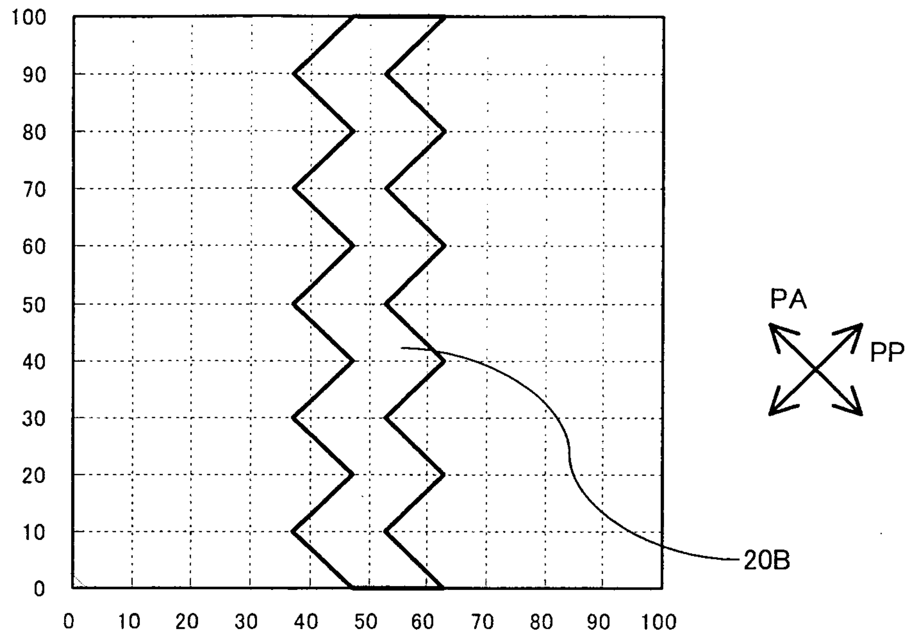
100
90
80
70
60
50
40
30
20
10
0
0
10
20
30
40
50
60
70
80
90
100
20B
PA
PP

*FIG.11*

(a)

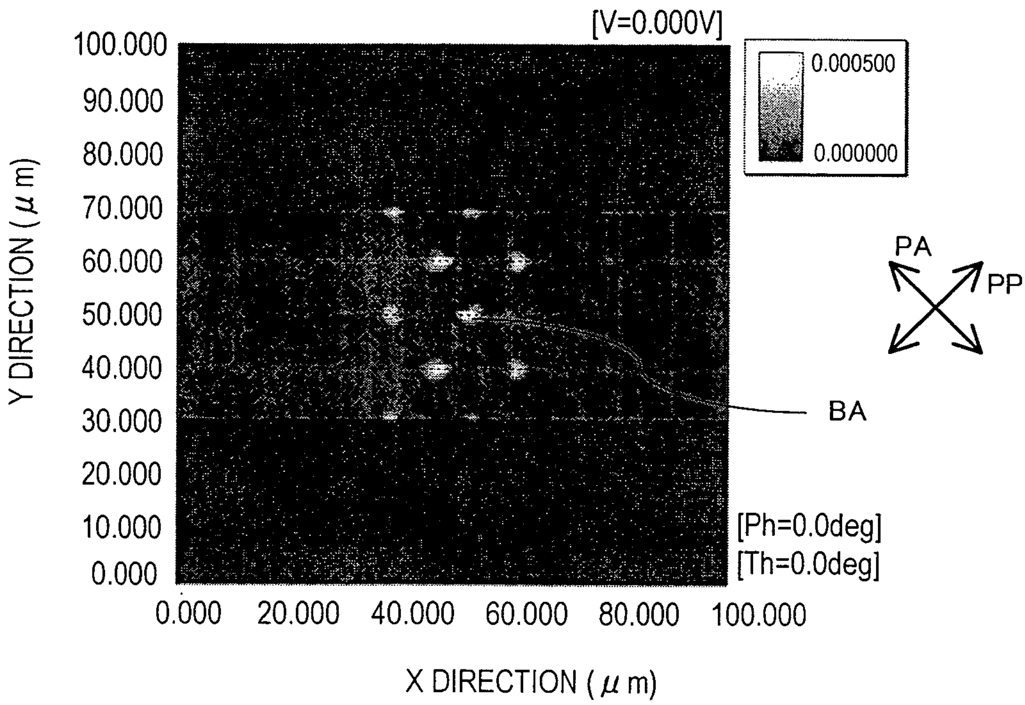
[V=0.000V]
0.000500
0.000000
100.000
90.000
80.000
70.000
60.000
50.000
40.000
30.000
20.000
10.000
0.000
Y DIRECTION (μm)
0.000
20.000
40.000
60.000
80.000
100.000
X DIRECTION (μm)
[Ph=0.0deg]
[Th=0.0deg]
PA
PP
BA

(b)

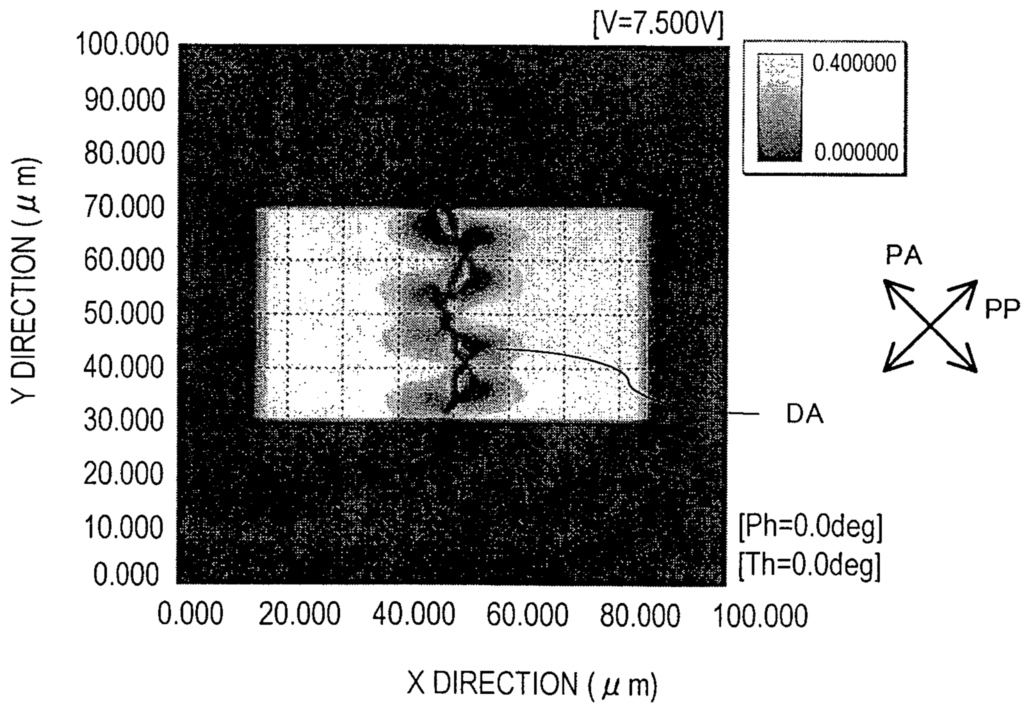
[V=7.500V]
0.400000
0.000000
100.000
90.000
80.000
70.000
60.000
50.000
40.000
30.000
20.000
10.000
0.000
Y DIRECTION (μm)
0.000
20.000
40.000
60.000
80.000
100.000
X DIRECTION (μm)
[Ph=0.0deg]
[Th=0.0deg]
PA
PP
DA

*FIG.12*

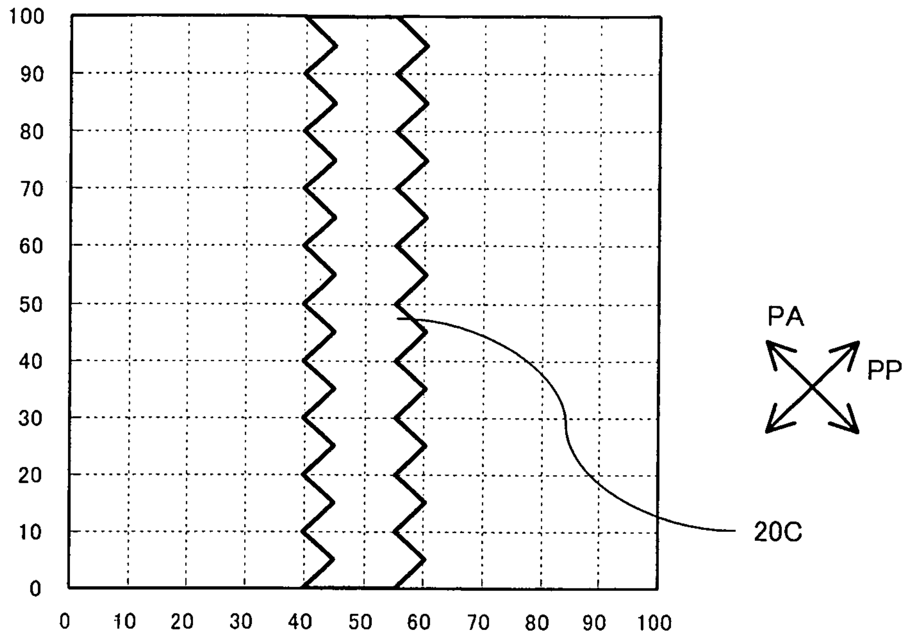
100
90
80
70
60
50
40
30
20
10
0
0
10
20
30
40
50
60
70
80
90
100
PA
PP
20C

*FIG.13*

(a)

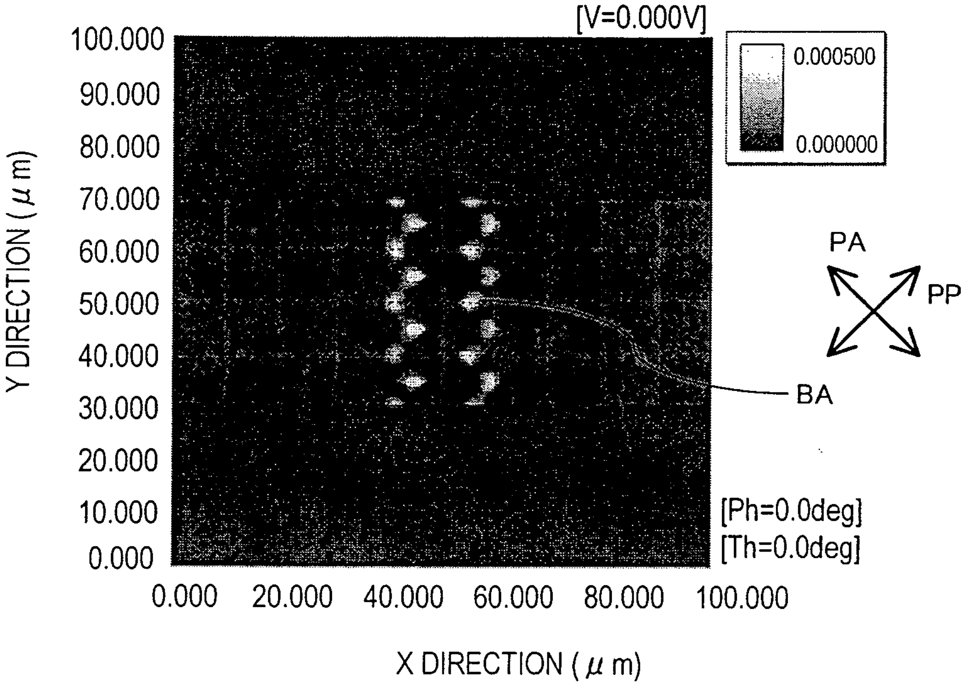
[V=0.000V]
100.000
90.000
80.000
70.000
60.000
50.000
40.000
30.000
20.000
10.000
0.000
Y DIRECTION (μ m)
0.000
20.000
40.000
60.000
80.000
100.000
X DIRECTION (μ m)
0.000500
0.000000
PA
PP
BA
[Ph=0.0deg]
[Th=0.0deg]

(b)

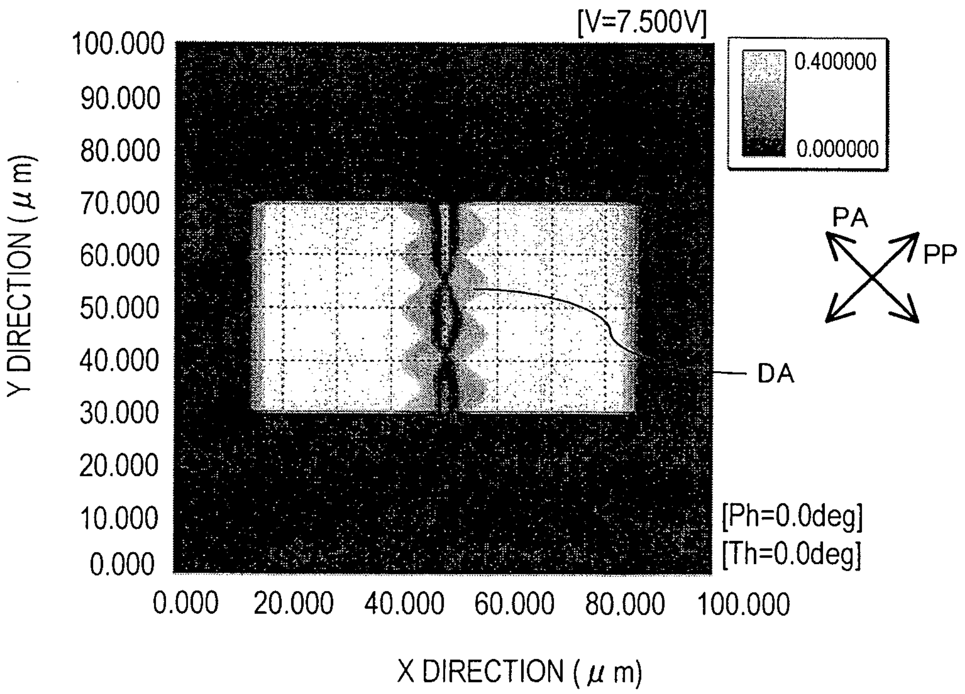
[V=7.500V]
100.000
90.000
80.000
70.000
60.000
50.000
40.000
30.000
20.000
10.000
0.000
Y DIRECTION (μ m)
0.000
20.000
40.000
60.000
80.000
100.000
X DIRECTION (μ m)
0.400000
0.000000
PA
PP
DA
[Ph=0.0deg]
[Th=0.0deg]

*FIG.14*

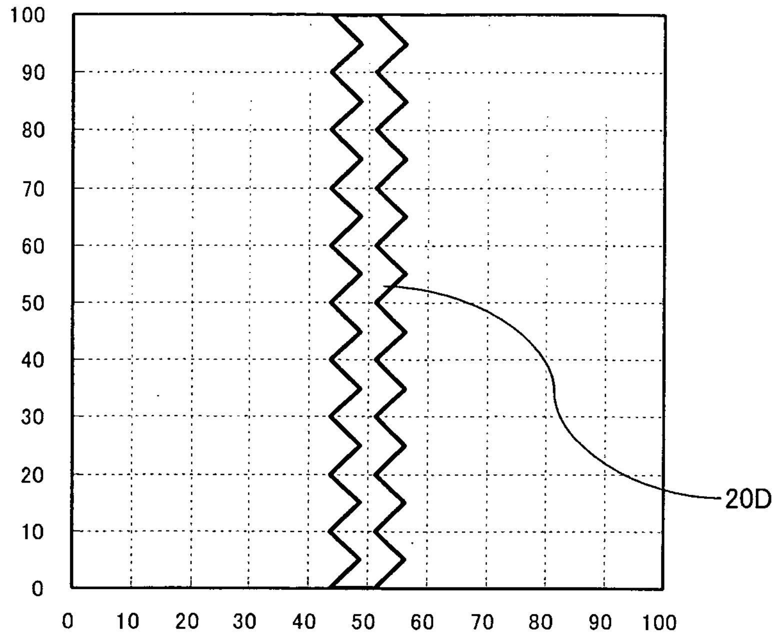

*FIG.15*

(a)

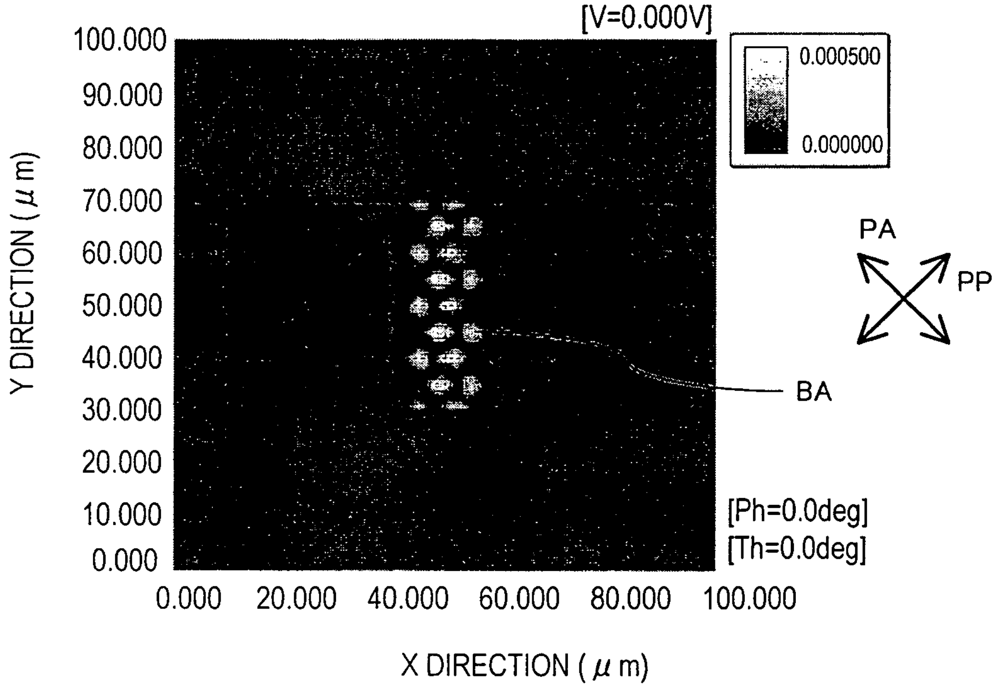
[V=0.000V]
0.000500
0.000000
Y DIRECTION (μm)
100.000
90.000
80.000
70.000
60.000
50.000
40.000
30.000
20.000
10.000
0.000
X DIRECTION (μm)
0.000
20.000
40.000
60.000
80.000
100.000
PA
PP
BA
[Ph=0.0deg]
[Th=0.0deg]

(b)

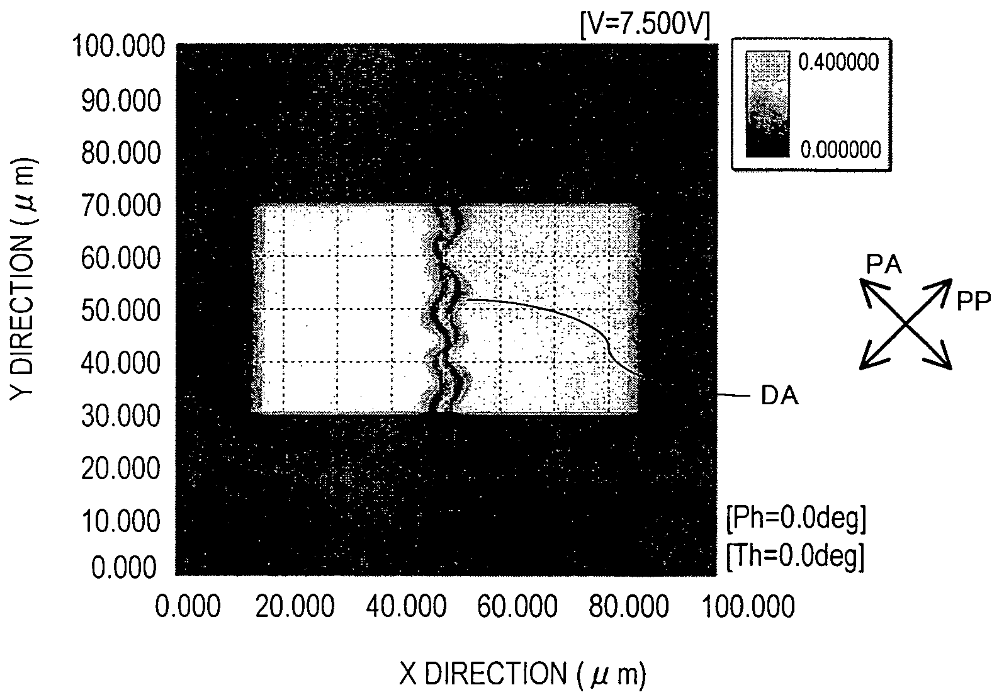
[V=7.500V]
0.400000
0.000000
Y DIRECTION (μm)
100.000
90.000
80.000
70.000
60.000
50.000
40.000
30.000
20.000
10.000
0.000
X DIRECTION (μm)
0.000
20.000
40.000
60.000
80.000
100.000
PA
PP
DA
[Ph=0.0deg]
[Th=0.0deg]

FIG.16

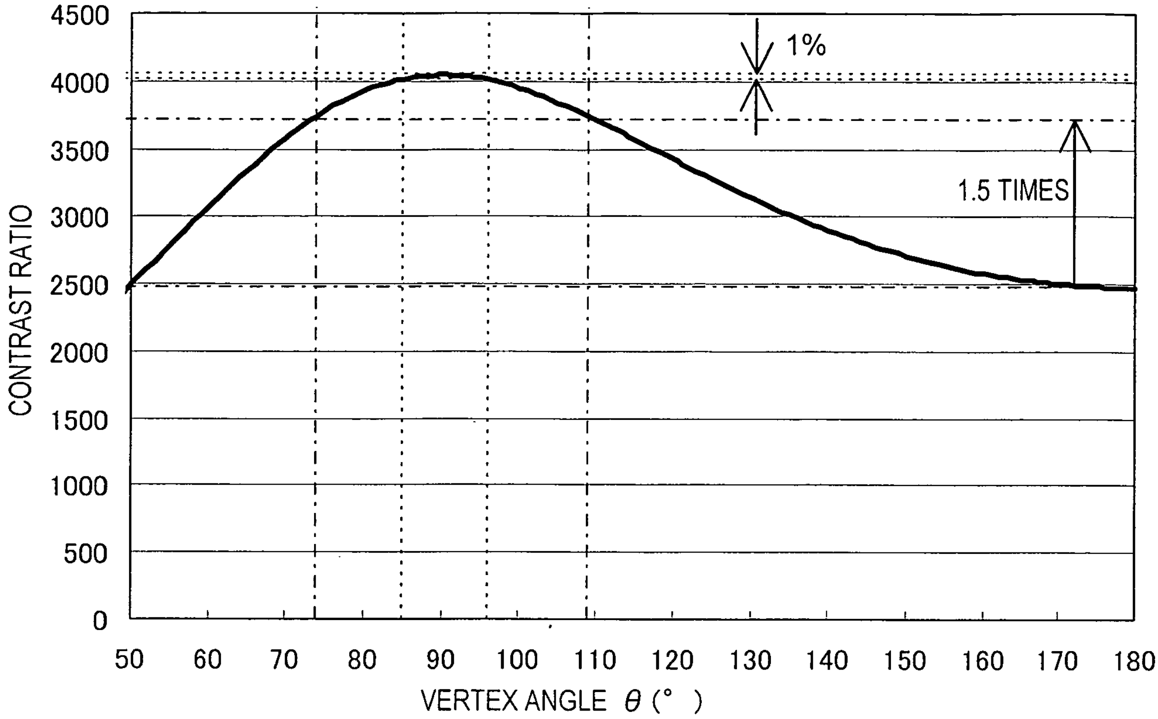
4500
4000
3500
3000
2500
2000
1500
1000
500
0
CONTRAST RATIO
1%
1.5 TIMES
50
60
70
80
90
100
110
120
130
140
150
160
170
180
VERTEX ANGLE θ (° )

FIG.17

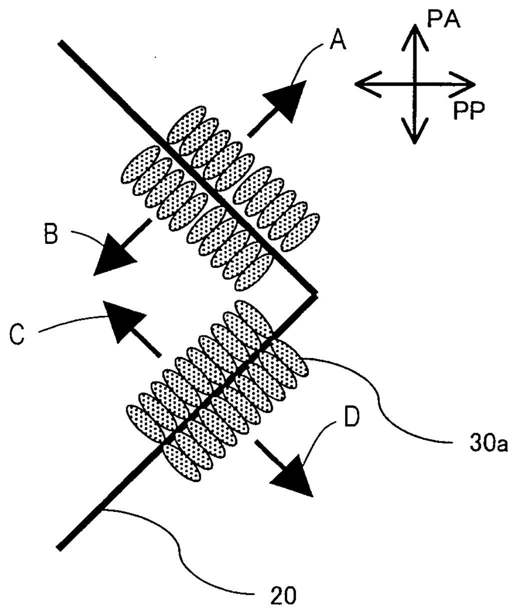
PA
PP
A
B
C
D
30a
20

*FIG.18*

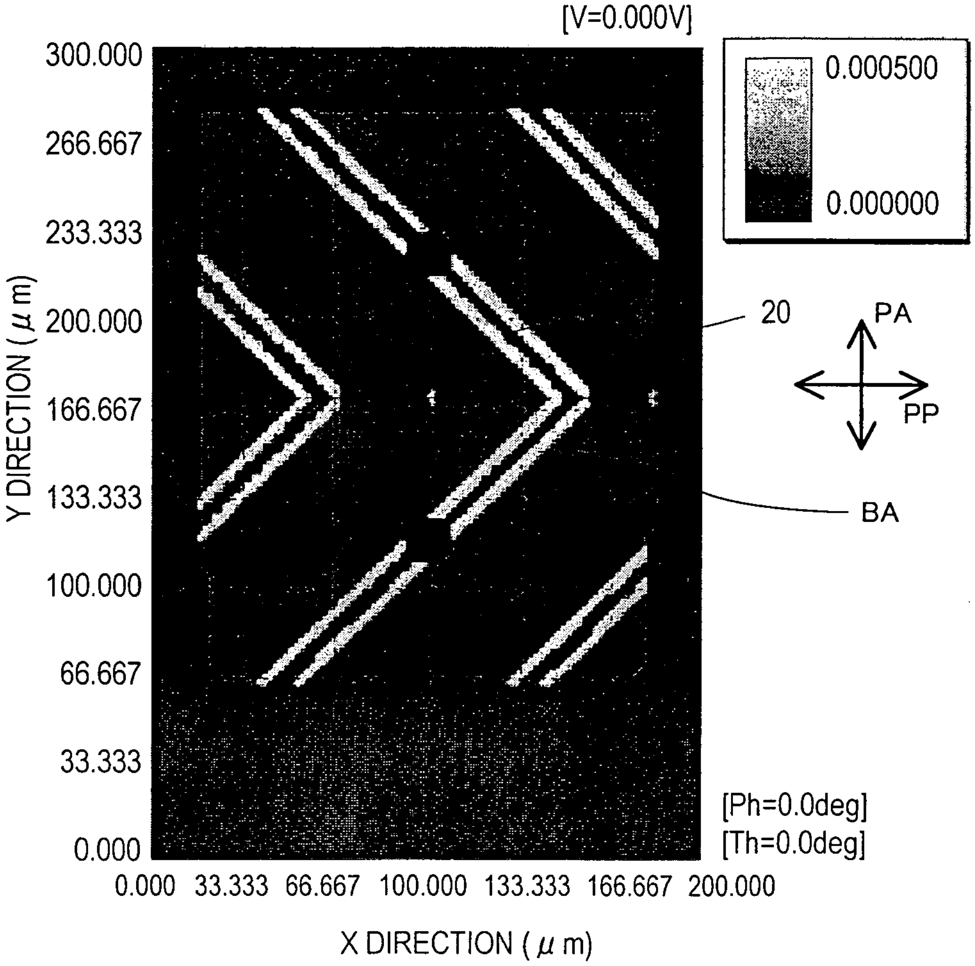
[V=0.000V]
300.000
266.667
233.333
200.000
166.667
133.333
100.000
66.667
33.333
0.000
Y DIRECTION (μm)
0.000 33.333 66.667 100.000 133.333 166.667 200.000
X DIRECTION (μm)
0.000500
0.000000
20
BA
PA
PP
[Ph=0.0deg]
[Th=0.0deg]

**INTERNATIONAL SEARCH REPORT**

International application No.
PCT/JP2009/001665

A. CLASSIFICATION OF SUBJECT MATTER
*G02F1/1337*(2006.01)i

According to International Patent Classification (IPC) or to both national classification and IPC

B. FIELDS SEARCHED

Minimum documentation searched (classification system followed by classification symbols)
G02F1/1337

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-193975 A (Fujitsu Ltd.),<br>14 July, 2000 (14.07.00),<br>Par. Nos. [0049] to [0050]; Fig. 17<br>& US 2001/0043305 A1 & WO 2000/041031 A1<br>& KR 10-2007-0086170 A | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 April, 2009 (23.04.09) | 12 May, 2009 (12.05.09) |
| Name and mailing address of the ISA/<br>Japanese Patent Office<br>Facsimile No. | Authorized officer<br><br>Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11242225 A